# EUROPEAN PATENT APPLICATION

(11) **EP 3 879 892 A1**
(43) Date of publication of application: **15.09.2021**
(21) Application number: 21172024.8
(22) Date of filing: 27.08.2014
(51) Int. Cl.: H04W 56/00, H04W 74/08, H04W 76/15, H04W 76/18

(54) **METHOD AND SYSTEM FOR RANDOM ACCESS PROCEDURE AND RADIO LINK FAILURE IN INTER-ENB CARRIER AGGREGATION**

(30) Priority: 27.08.2013 IN 3812CH2013; 21.08.2014 IN 3812CH2013
(62) Divisional of application: 14839021.4
(71) Applicant: Samsung Electronics Co., Ltd., Suwon-si 16677 (KR)
(72) Inventor: Ingale, Mangesh Abhimanyu, 560037 Bangalore (IN); Sharma, Neha, 560037 Bangalore (IN); Kim, Seong-Hun, 16677 Suwon-si (KR)
(74) Representative: Nederlandsch Octrooibureau

(57) **Abstract**

A method and system for performing a Random Access procedure by a User Equipment in a wireless network, including:
performing a random access procedure on a Primary Cell of a first base station;
receiving, from the first BS, a Radio Resource Control connection reconfiguration message for addition or modification of a second BS;
transmitting, to the first BS, a response message corresponding to the RRC connection reconfiguration message;
performing the RA procedure on a Secondary Cell of the second BS, including transmitting a RA preamble on a Physical Random Access Channel, receiving, from the second BS, a random access response RAR message, and setting a first cell radio network temporary identifier C-RNTI to a value of a temporary C-RNTI included the RAR message; and
transmitting uplink data to the SCell,
wherein the first C-RNTI and a second C-RNTI allocated by the first BS are independently allocated to the UE.

## Description

### [Technical Field]

The present invention relates to a wireless network and more particularly to an inter-eNB carrier aggregation in the wireless network deploying dual connectivity.

### [Background Art]

Increase in mobile traffic volume has increased demand for throughput and the mobility robustness of a User Equipment (UE) in the wireless network. For increased throughput, carrier aggregation has been developed in which the UE is served by multiple serving cells. When demand for more data rate arises for a UE then more than one serving cell on different carrier frequencies is configured for the UE. The serving cells are governed by a single eNodeB (eNB) and the deployment is called as intra eNB carrier aggregation. In the intra-eNB carrier aggregation, since all the processing related to the transmissions on the multiple carrier frequencies happen within the same eNB, an ideal backhaul exists between the multiple serving cells to which the UE is connected.

With the deployment of small cells on frequencies in the higher frequency band (more than 3.0 GHz band) for offloading purpose, the need to aggregate carriers across the different eNBs which are geographically separated is inevitable. An emerging technology called dual connectivity with an inter-eNB carrier aggregation allows the UE to maintain connectivity to multiple serving cells where it is assumed that non-ideal backhaul exists between the network nodes corresponding to the multiple serving cells. In the dual connectivity the serving carrier providing coverage to the UE serves as the mobility anchor and the carriers from small provide extra capacity. It is possible to use ideal backhaul using very high speed and very low latency fiber optic links between the serving cell served by the mobility anchor and the small cell layer, however the deployment cost would be prohibitive and mobile operator would leverage on existing non-ideal backhaul links. In the inter-eNB carrier aggregation in which the UE is served by serving cells associated with different eNBs.

When carrier aggregation between two cells controlled by two geographically separated eNBs is envisioned then the UE needs to perform uplink synchronization towards respective cells. In such a scenario, dual connectivity is envisioned such that UE maintains physical links with the two cells controlled by two geographically separated eNBs. Further, the UE maintains dual connectivity both in downlink and uplink or only downlink. In uplink, the dual connectivity towards the two cells could be simultaneous or could be time multiplexed. The uplink timing advance to the mobility anchor i.e anchor eNB also called as Master eNB (MeNB) is different from the uplink timing advance towards the assisting eNB also called as Small eNB or Secondary eNB (SeNB) since they are geographically separated and operating on two separate frequencies (component carriers) in different frequency bands. The UE is served by a Primary serving cell (PCell) of MeNB on a serving frequency providing coverage and mobility and is aggregated with one or more Secondary cell (SCells) of the SeNB and/or the MeNB served on other serving frequencies respectively providing offloading opportunity to increase data rates. This is similar to inter-band non co-located carrier aggregation deployed through a Remote Radio Head (RRH).However, the RRH links to a macro eNB are ideal (typically fiber optic links) whereas link between the MeNB and SeNB is non-ideal in the context of dual connectivity mode of operation.

Whenever the UE needs to uplink synchronize on serving frequency assigned to SCell typically served by the SeNB, the UE is required to perform a random access procedure. In the intra-eNB carrier aggregation the UE performs the random access procedure after activation of the SCell of the MeNB and only after receiving a Physical Downlink Control Channel (PDCCH) order from the SCell such that the response to the random access preamble transmitted on the SCell is received in the PCell of the MeNB. However, in dual connectivity mode of operation with the non-ideal backhaul, receiving a random access response from the PCell of the MeNB corresponding to a random access preamble transmitted on the SCell of the SeNB is not a trivial task and would encounter long delays which are not suitable for the successful completion of random access procedure. Therefore, an independent random access procedure on MeNB and SeNB for respective timing advance is appreciated.

Further, when the UE is served by a serving frequency assigned to the PCell of MeNB and by the serving frequency assigned to the SCell of the SeNB, handling of uplink Radio Link Failure (RLF) procedure in the UE for the data radio bearer (DRB) mapped to the Evolved Packet System (EPS) bearer on the SCell of the SeNB is performed as defined in RLC specification TS 36.322.

In accordance with the specification in legacy intra-eNB carrier aggregation once the UE detects RLF on the PCell, the UE starts RRC connection re-establishment procedure whereas RLF on the SCell is left to PCell handling. In legacy intra-eNB carrier aggregation mode of operation of the UE, when transmission and reception of the EPS bearer data is carried on both the PCell and the SCell of the same eNB, the re-establishment leads to service interruption on both the PCell and the SCell, since in the legacy intra-eNB carrier aggregation a Radio Link Control (RLC) entity and PDCP entity are transparent to the carrier aggregation. Thus, if error condition occurs at the RLC entity in the UE, then the UE has to recover from the error by a re-establishment procedure. However, in dual connectivity mode of operation of the UE involving inter-eNB carrier aggregation the PCell of the MeNB and the SCell of the SeNB carry data for different bearers of the UE. In such case, if uplink RLF occurs due to RLC error then the RLC entity in the UE is able to distinguish whether the error condition occurred on the PCell served by the MeNB or the SCell by the SeNB. If the legacy procedure of RRC connection re-establishment is triggered when RLC error occur on SCell of the SeNB then it would interrupt on-going services and can cause loss of data for both PCell as well as SCell. Also, the legacy procedure for re-establishment of a radio Resource Control (RRC) connection requires more signaling effectively increasing battery power consumption. Thus, initiating the legacy procedure of RRC connection re-establishment if uplink RLF occurs on the EPS bearer on the SCell of the SeNB due to RLC errors then it is not effective and efficient from service interruption point of view.

### [Disclosure]

### [Technical Problem]

In accordance with the specification in legacy intra-eNB carrier aggregation once the UE detects RLF on the PCell, the UE starts RRC connection re-establishment procedure whereas RLF on the SCell is left to PCell handling. In legacy intra-eNB carrier aggregation mode of operation of the UE, when transmission and reception of the EPS bearer data is carried on both the PCell and the SCell of the same eNB, the re-establishment leads to service interruption on both the PCell and the SCell, since in the legacy intra-eNB carrier aggregation a Radio Link Control (RLC) entity and PDCP entity are transparent to the carrier aggregation. Thus, if error condition occurs at the RLC entity in the UE, then the UE has to recover from the error by a re-establishment procedure. However, in dual connectivity mode of operation of the UE involving inter-eNB carrier aggregation the PCell of the MeNB and the SCell of the SeNB carry data for different bearers of the UE. In such case, if uplink RLF occurs due to RLC error then the RLC entity in the UE is able to distinguish whether the error condition occurred on the PCell served by the MeNB or the SCell by the SeNB. If the legacy procedure of RRC connection re-establishment is triggered when RLC error occur on SCell of the SeNB then it would interrupt on-going services and can cause loss of data for both PCell as well as SCell. Also, the legacy procedure for re-establishment of a radio Resource Control (RRC) connection requires more signaling effectively increasing battery power consumption. Thus, initiating the legacy procedure of RRC connection re-establishment if uplink RLF occurs on the EPS bearer on the SCell of the SeNB due to RLC errors then it is not effective and efficient from service interruption point of view.

### [Technical Solution]

The principal object of the embodiments herein is to provide a method and system for configuring a User Equipment (UE) for dual connectivity mode of operation in a wireless network deploying an inter-eNB carrier aggregation.

Another object of the invention is to provide a method for allowing the UE to initiate a random access procedure on a Secondary eNB (SeNB) during an addition or a replacement of a Secondary Cell (SCell) of the SeNB.

Another object of the invention is to provide a method for handling a Radio Link Failure (RLF) on a data radio bearer of the SCell of the SeNB.

Accordingly the invention provides a method for configuring a User Equipment (UE) for dual connectivity mode of operation in a wireless network involving a first evolved Node B (eNB) connected to a second eNB. The UE is carrier aggregated with at least one first serving frequency served by the first eNB and at least one second serving frequency served by the second eNB. The method comprises receiving a configuration in downlink direction from a Primary Cell (PCell) of the first eNB served on the first serving frequency for one of addition of the at least one second serving frequency associated with the second eNB and replacement of the at least one second serving frequency with a candidate second serving frequency. The candidate second serving frequency is associated with one of the second eNB and a candidate second eNB. The method further comprises initiating a random access procedure on the second serving frequency associated with the second eNB after one of the addition and the replacement of the second serving frequency. The random access procedure initiated by the UE is one of a contention based random access and a contention free random access. Furthermore, the method comprises sending status of communication link associated with the second serving frequency to the first eNB after the second serving frequency associated with second eNB is activated in the UE when the UE is configured for the dual connectivity mode of operation. The status of the communication link provides one of a success cause value and a failure cause value to the first eNB.

Accordingly the invention provides a method for handling a Radio Link Failure (RLF) in a User Equipment (UE) by a second eNB when the UE is configured for dual connectivity mode of operation in a wireless network involving a first evolved Node B (eNB) connected to the second eNB. The UE is carrier aggregated with at least one first serving frequency served by the first eNB and at least one second serving frequency served by the second eNB. The method comprises detecting a radio link problem on the second serving frequency associated with a serving cell of the second eNB. The detected radio link problem is a downlink radio link failure (RLF) identified based on at least one of Channel Quality Indication (CQI) reports and Hybrid Automatic Repeat Request (HARQ) Acknowledge/Negative-Acknowledgment ACK/NAK indications sent to the second eNB. Further, the method comprises reporting the downlink RLF to the first eNB. The report comprises at least one of a cause value field indicating the downlink RLF and a reconfiguration message. The reconfiguration message provides reconfiguration parameters to re-establish at least one data radio bearer handled by the second eNB and replacement of the SCell associated with the second serving frequency. Further, the method comprises receiving a Radio Resource Control (RRC) Connection Reconfiguration message by the UE on the first serving frequency served by a primary Cell (PCell) associated with the first eNB in downlink direction from the first eNB to perform at least one action. The at least one action comprises replacing the SCell with PUCCH configuration of the second eNB with one of a suitable candidate SCell of the SeNB and a suitable SCell of a suitable candidate second eNB, deactivating the second serving frequency associated with the second eNB on which the RLF is detected and removing configuration associated with the second eNB.

Accordingly the invention provides a User Equipment (UE) with dual connectivity mode of operation in a wireless network involving a first evolved Node B (eNB) connected to a second eNB. The UE is carrier aggregated with at least one first serving frequency served by the first eNB and at least one second serving frequency served by the second eNB. Further the UE comprises an integrated circuit further comprising at least one processor, at least one memory having a computer program code within the circuit. The at least one memory and the computer program code is configured with the at least one processor and cause the UE to receive a configuration in downlink direction from a Primary Cell (PCell) of the first eNB served on the first serving frequency for one of addition of the at least one second serving frequency associated with the second eNB and replacement of the at least one second serving frequency with a candidate second serving frequency associated with one of the second eNB and a candidate second eNB. Further the UE is configured to initiate a random access procedure on the second serving frequency associated with the second eNB after one of the addition and the replacement of the second serving frequency. The random access procedure is one of a contention based random access and a contention free random access. Furthermore the UE is configured to send status of communication link associated with the second serving frequency to the first eNB after the second serving frequency associated with second eNB is activated in the UE and the UE is configured for the dual connectivity mode of operation, wherein the status provides one of a success cause value and a failure cause value.

Accordingly the invention provides a wireless network for configuring a User Equipment (UE) dual connectivity, wherein the wireless network comprises a first evolved Node B (eNB) connected to plurality of second eNBs. The UE is carrier aggregated with at least one first serving frequency served by the first eNB and at least one second serving frequency served by a second eNB among the plurality of second eNBs. The wireless network is configured to send a configuration in downlink direction from a Primary Cell (PCell) of the first eNB, to the UE served on the first serving frequency for one of addition of the at least one second serving frequency associated with the second eNB and replacement of the at least one second serving frequency with a candidate second serving frequency associated with one of the second eNB and a candidate second eNB. Further, the wireless network is configured to respond to a random access procedure, by the second eNB, on the second serving frequency in response to initiation of the random access procedure by the UE after one of the addition and the replacement of the second serving frequency. The random access procedure is one of a contention based random access and a contention free random access. Furthermore, the wireless network is configured to receive status of communication link associated with the second serving frequency by the first eNB after the second serving frequency associated with second eNB is activated in the UE and the UE is configured for the dual connectivity mode of operation. The status of the communication link provides one of a success cause value and a failure cause value to the first eNB.

Accordingly the invention provides a wireless network for handling a Radio Link Failure (RLF) in a User Equipment (UE) by a second eNB, when the UE is configured for dual connectivity mode of operation in the wireless network involving a first evolved Node B (eNB) connected to the second eNB such that the UE is carrier aggregated with at least one first serving frequency served by the first eNB and at least one second serving frequency served by the second eNB. The second eNB is configured to detect a radio link problem on the second serving frequency associated with a serving cell of the second eNB. The detected radio link problem is a downlink radio link failure (RLF) identified based on one of Channel Quality Indication (CQI) reports and Hybrid Automatic Repeat Request (HARQ) Acknowledge/Negative-Acknowledgment ACK/NAK indications sent to the second eNB. Further, the second eNB is configured to report the downlink RLF to the first eNB. The report comprises at least one of a cause value field indicating the downlink RLF and a reconfiguration message. Further, the reconfiguration message provides reconfiguration parameters to re-establish a downlink data radio bearer handled by the second eNB and replacement of the SCell associated with the second serving frequency.

These and other aspects of the embodiments herein will be better appreciated and understood when considered in conjunction with the following description and the accompanying drawings. It should be understood, however, that the following descriptions, while indicating preferred embodiments and numerous specific details thereof, are given by way of illustration and not of limitation. Many changes and modifications may be made within the scope of the embodiments herein without departing from the spirit thereof, and the embodiments herein include all such modifications.

### [Description of Drawings]

This invention is illustrated in the accompanying drawings, throughout which like reference letters indicate corresponding parts in the various figures. The embodiments herein will be better understood from the following description with reference to the drawings, in which:
FIG. 1 illustrates a wireless network deploying an inter-eNB carrier aggregation for a User Equipment (UE) with dual connectivity, according to embodiments as disclosed herein;
FIG. 2a illustrates a dual connectivity protocol stack in a Master eNB (MeNB) and a Secondary eNB (SeNB)for no-split data radio bearer implementation and FIG. 2b illustrates the dual connectivity protocol stack in the UE for no-split data radio bearer implementation, according to embodiments as disclosed herein;
FIG. 3a illustrates the dual connectivity protocol stack in the MeNB and the SeNB for split data radio bearer implementation and FIG. 3b illustrates the dual connectivity protocol stack in the UE for split data radio bearer implementation, according to embodiments as disclosed herein;
FIG. 4 is a flow diagram illustrating a method for configuring the UE for dual connectivity mode of operation and subsequently initiating a random access procedure on the SeNB during an addition or a replacement of a Secondary Cell (SCell) of the SeNB. Further, a Radio Link problem, if occurred, on a data radio bearer of the SCell of the SeNB is handled, according to embodiments as disclosed herein;
FIG. 5 is an example sequence diagram illustrating the initiation of random access procedure after addition or replacement of the SCell of the SeNB, where the SCell is a SCell with a Physical Uplink Control Channel (PUCCH) configuration, according to embodiments as disclosed herein;
FIG. 6 is an example sequence diagram illustrating the initiation of random access procedure while addition or replacement of the SCell of the SeNB, where the SCell is a SCell without the PUCCH configuration, according to embodiments as disclosed herein;
FIG. 7 is an example sequence diagram illustrating handling of a Random Access Channel (RACH) failure, according to the embodiments as disclosed herein;
FIG. 8 is an example sequence diagram illustrating handling of a Radio Link Error (RLC) error, according to the embodiments as disclosed herein;
FIG. 9 is a flow diagram illustrating a method for reporting of the radio link problem identified between the UE and the SCell by a common PDCP entity of the UE in a PDCP Protocol Data Unit (PDU), according to embodiments as disclosed herein;
FIG. 10a and Fig 10b are flow diagrams illustrating a methods for performing a random access procedure on the MeNB and the SeNB using either a parallel random access or a sequential random access, according to embodiments as disclosed herein; and
FIG. 11 is a flow diagram illustrating a method for SeNB-based reporting of the downlink radio link problem identified between the UE and the SCell using CQI report received from the UE, according to embodiments as disclosed herein.

### [Mode for Invention]

The embodiments herein and the various features and advantageous details thereof are explained more fully with reference to the non-limiting embodiments that are illustrated in the accompanying drawings and detailed in the following description. Descriptions of well-known components and processing techniques are omitted so as to not unnecessarily obscure the embodiments herein. The examples used herein are intended merely to facilitate an understanding of ways in which the embodiments herein can be practiced and to further enable those of skill in the art to practice the embodiments herein. Accordingly, the examples should not be construed as limiting the scope of the embodiments herein.

The embodiments herein achieve a method and system for configuring a User Equipment (UE) for dual connectivity mode of operation in a wireless network deploying an inter-eNB carrier aggregation. The method allows the UE to initiate a random access procedure on the SeNB during an addition or a replacement of a Secondary Cell (SCell) of the SeNB assigned with a second serving frequency. In the inter-eNB carrier aggregation, the UE, capable of dual connectivity is carrier aggregated with one or more serving frequencies served by a Master eNB (MeNB) (i.e a first set of serving frequencies in legacy intra-eNB carrier aggregation mode) and one or more serving frequencies served by the SeNB (i.e a second set of serving frequencies also in legacy intra-eNB carrier aggregation mode). The so called dual connectivity mode of operation for the UE in a generic sense is between the first set of carrier frequencies served by the MeNB and the second set of carrier frequencies served by the SeNB. The MeNB is connected to the SeNB with an interface characterized by either a non-ideal backhaul link or an ideal backhaul link. In a particular case, there may be one frequency in the first set served by the MeNB and one frequency in the second set served by the SeNB in the so called dual connectivity mode of operation.

The cell assigned with a serving frequency among the one or more serving frequencies associated with the MeNB to which the UE is anchored is a Primary Cell (PCell) i.e the serving frequency of the MeNB on which the UE had established the RRC connection. Whereas, all other serving frequencies associated with the MeNB are the Secondary Cells (SCells) of the MeNB. The cells assigned with one or more serving frequencies associated with the SeNB are the Secondary Cells (SCells) of the SeNB. The first set of serving cells served by the MeNB is called Master Cell Group (MCG) whereas the second set of serving cells served by the SeNB is called Secondary Cell Group (SCG). Further, whenever the SCG is added to the UE then one of SCell of the SeNB is provisioned with PUCCH resource configuration referred as SCell with PUCCH resources and all other SCells of the UE belonging to the SeNB can be referred as a SCell without the PUCCH resources.

In an inter-eNB carrier aggregation scenario with the UE configured with dual connectivity mode of operation, the UE needs to perform synchronization towards the SeNB since MeNB and the SeNB are geographically separated. Moreover, the data path for the SeNB and the MeNB is also separated, hence the UE is required to initiate the independent random access procedure in certain cases such as for addition of SCell configuration belonging to the SeNB (i.e a set of second serving frequency) for which uplink synchronization is to be performed or replacement of SCell configuration of SeNB during which uplink synchronization is to be performed.

Unlike the existing Long Term Evolution (LTE) Advanced based on Release-10/11 3GPP specification where the random access procedure to be initiated on the SCell by the UE is handled under the control of the wireless network, the proposed method allows the UE to autonomously initiate the random access procedure on the SCell of the SeNB. The method provides a contention based random access procedure wherein the random access procedure is initiated on the SeNB by the UE during the addition or replacement of the SCell with the PUCCH configuration belonging to the SeNB. The method provides a contention free random access procedure where the random access procedure is initiated on the SeNB by the UE during the addition or replacement of the SCell without the PUCCH configuration belonging to the SeNB.

Whenever the UE configured with dual connectivity mode of operation in the inter-eNB carrier aggregation scenario is allowed to perform the contention based random access procedure, there could be situation where the UE may need to perform two random access procedures in parallel. One random access procedure can be on the MeNB and other on the SeNB. In Release-11 of the 3GPP specification, since the SCell random access initiation is under control of a network node in the wireless network, network node could avoid such parallel random access scenario because both the PCell and SCell are under the control of the same eNB (i.e same wireless network node). However, in case of eNB implementation where random access on PCell and SCell is not coordinated properly within the same eNB and the parallel random access gets triggered, then according to 3GPP specification 36.321, it is up to the UE implementation to handle such simultaneous random access procedures. Unlike existing method, the proposed method allows the contention based random access procedure on the SCell of the SeNB when already random access procedure is ongoing on the MeNB, hence does not require UE behavior to be left for implementation when situation of simultaneous random access procedure arises. The method allows the UE to perform the required random access procedures on the MeNB and the SeNB either using a parallel random access or a sequential random access based on the current random access procedure status on the MeNB and the SeNB.

Further, whenever the UE is served by the SCell of the SeNB with data radio bearers established on the SCell, the method provides handling of a Radio Link Failure (RLF) by identifying a radio link problem and detecting the RLF on data radio bearers (EPS bearers) between the UE and the SCell of the SeNB.

In an embodiment, the method allows the UE to prepare and send a RLF report to the MeNB with a cause value to indicate the cause identified in the detected RLF. The cause identified by the UE can be a Random Access Channel (RACH) failure on the SCell with PUCCH configuration which is serving the UE. The cause identified can be a Radio Link Control (RLC) error on the uplink data radio bearer established on the SCell of SeNB serving the UE. The cause value is sent by the UE to the MeNB within the RLF report.

In an embodiment, the RLF report can be sent in a new dedicated RRC message, an existing RRC message, a new Medium Access Control (MAC) Control Element (CE) and a new Packet Data Control Protocol (PDCP) Protocol Data Unit (PDU).

Upon detection of the RLF on the SCell of the SeNB, the method allows the UE to refrain from initiating a radio resource control (RRC) connection re-establishment procedure towards the MeNB and suspend the data radio bearer(s) associated with the SCell of the SeNB. The method further provides actions and procedures to be followed by UE to recover from the RLF on the SCell of the SeNB to resume data exchange.

In an embodiment, in response to the RLF report sent to the MeNB, the method further allows the UE to receive a RRC connection re-configuration message including radio re-configuration parameters on the PCell of the MeNB in downlink direction. The parameters in the RRC connection re-configuration message enable the UE to resume the suspended data radio bearer associated with the SeNB by re-establishing the suspended data radio bearers.

The various embodiments for detection of the RLF on the SCell of the SeNB and reporting the RLF to the MeNB are also based on the type of dual connectivity protocol stack implemented in the UE, the MeNB and the SeNB. The protocol stack implementation can be a split data radio bearer implementation wherein the EPS bearer is split at eNB level for dual connectivity mode of operation. Another protocol stack implementation is a no-split of data radio bearer implementation wherein the EPS bearer is already split in the core network level for dual connectivity mode of operation.

In an embodiment, the UE can be a mobile phone, a tablet, a personal digital assistant, a palmtop, a laptop, a wearable device, a machine type communication device or any communication device.

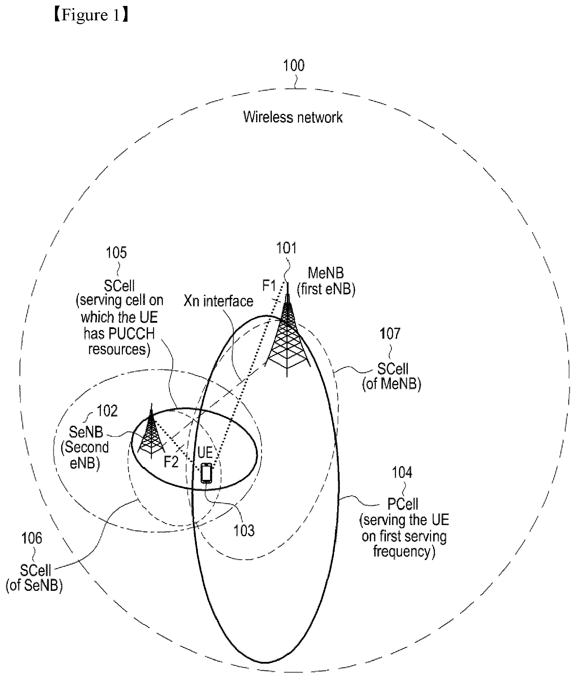

Referring now to the drawings, and more particularly to FIGS. 1 through 11, where similar reference characters denote corresponding features consistently throughout the figures, there are shown preferred embodiments.

FIG. 1 illustrates a wireless network 100 deploying the inter-eNB carrier aggregation for the User Equipment (UE) with dual connectivity mode of operation, according to embodiments as disclosed herein. As shown in the FIG. 1, the wireless network 100 includes a MeNB 101 also referred as a first eNB, a SeNB 102 also referred as the second eNB and a UE 103. The MeNB serves one or more cells including but not limited to a Primary Cell (PCell) 104 and a Secondary Cell (SCell) 107. The PCell 104 serves the UE 103 on a corresponding serving frequency assigned to the PCell 104 from one or more of serving frequencies (a set of first serving frequencies) of the MeNB 101.

In an example scenario of the FIG. 1, in an inter-band carrier aggregation, the UE 103 is served by a carrier (F1) associated with MeNB 101 from lower frequency band that provides coverage and acts as a mobility anchor. The other component carrier (F2) associated with SeNB 102 from higher frequency band assigned to a SCell 105 of the SeNB 102 provides high data rate to the UE. The MeNB 101 and the SeNB 102 are connected through a non-ideal backhaul such as X2 interface. The SCell 105 associated with SeNB 102 is configured by the MeNB 101 such that SCell 105 serving the UE 103 on the component carrier F2 is provisioned with the PUCCH resource configuration. The one or more serving frequencies associated with one or more SCells belonging to the SeNB in the wireless network 100 capable of providing dual connectivity to the UE 103 are configured from a second set of serving frequencies.

In accordance with the 3GPP specification the data rate of the UE 103 can be increased by addition of the one or more SCells from the SeNB 102 through inter-eNB carrier aggregation and/or SCells from the MeNB 101 by deploying an intra-eNB carrier aggregation. Whenever required, the MeNB 101 may replace the SCell 105 (which is currently the SCell with PUCCH resources) to a candidate SCell. The candidate SCell may belong to the SeNB 102 or any other candidate SeNB present in the wireless network 100.

Although the FIG. 1 depicts only one SeNB, it is understood by a person of ordinary skill in the art that the wireless network 100 may include one or more SeNBs each operating with one or more SCells.

The method allows the UE 103 to perform random access procedure on the SeNB during addition and/or replacement of the SCells associated with SeNB 102 on the corresponding serving frequencies. Further, the method allows the UE 103 to handle RLF between UE and the SCell of SeNB 102 currently serving the UE 103 in dual connectivity mode of operation by reporting the RLF to the MeNB 101. The method further allows the UE 103 to re-establish the data radio bearer that was suspended due to detection of the RLF on the SCell 105 after receiving RRC reconfiguration parameters from the MeNB 101. Further, the UE 103 can re-establish the suspended data radio bearer using one of the multiple options available based on re-configuration parameters received in the RRC connection re-configuration message from the MeNB 101.

In an embodiment, the wireless network 100 can be LTE Network or any other network based on 3GPP Radio Access technology (RAT) or non 3GPP RAT deploying the inter-eNB carrier aggregation for providing dual connectivity to the UE.

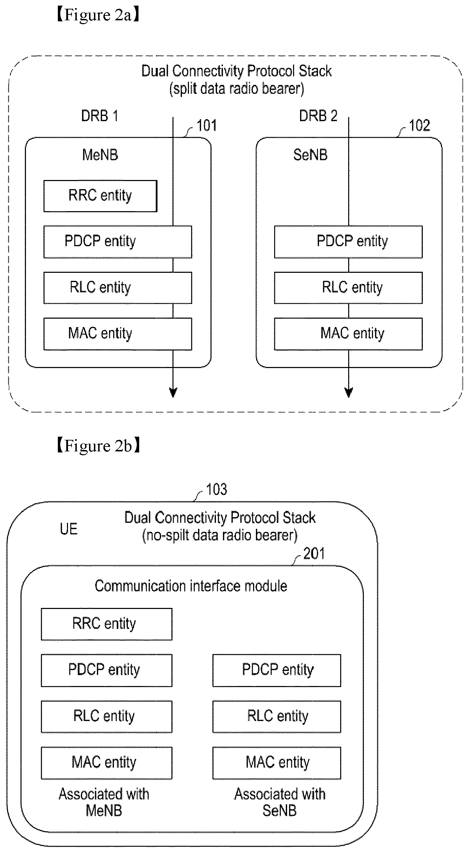

FIG. 2a illustrates a dual connectivity protocol stack in the Master eNB (MeNB) and the Secondary eNB (SeNB) for no-split data radio bearer implementation wherein the DRB1 handled by MeNB 101 and DRB2 handled by SeNB 102 are split at the serving gateway (SGW) in the core network, according to embodiments as disclosed herein. FIG. 2b illustrates dual connectivity protocol stack implementation in the UE 103 for no-split data radio bearer implementation wherein there is dual stack one associated with the MeNB 101 and the other associated with the SeNB 102, according to embodiments as disclosed herein. Based on the dual connectivity protocol stack implementation in the UE 103, the MeNB 101 and the SeNB 102, the method provides various embodiments for handling RLF on the data bearer between the UE 103 and the SeNB 102 by various entities of the protocol stack and is described later.

FIG. 2a depicts the dual connectivity protocol stack in accordance with the 3GPP specifications for no-split bearer implementations where a Radio Resource Control (RRC) entity is present only in the MeNB 101. Further, the dual connectivity protocol stack in the MeNB 101 includes a Packet Data Control Protocol (PDCP) entity, a Radio Resource Control (RLC) entity, a Medium Access Control (MAC) entity handling a data radio bearer (DRB 1) established between the PCell 104 and the UE 103. The dual connectivity protocol stack in the SeNB 102 does not include the RRC entity as the MeNB 101 is the mobility anchor. The dual connectivity protocol stack for the SeNB 102 comprises the PDCP entity, the RLC entity and the MAC entity for handling data radio bearer (DRB 2) between the SCell 105 and the UE 103.

FIG. 2b depicts the dual connectivity protocol stack in accordance with the 3GPP specifications for no-split bearer implementations in the UE 103. The UE 103 includes a communication interface module 201 comprises two set of protocol stacks, one each for the data radio bearer associated with the MeNB 101 (DRB 1) and the data radio bearer associated with the SeNB 102 (DRB 2). The protocol stack in the UE 103 corresponding to the MeNB 101 and the SeNB 102 replicates the corresponding protocol stacks in the MeNB 101 and SeNB 102. As shown in the FIG. 2b, in the UE 103, a single RRC entity is common for the protocol stack associated with the MeNB 101 and the protocol stack associated with the SeNB 102 for no-split bearer implementation. The communication interface module 201 allows the UE 103 to communicate with nodes of the wireless network 100 such as the MeNB 101 and the SeNB 102. It is understood to a person of ordinary skilled in the art that the UE 103 comprises a plurality of other modules for carrying out plurality of functions are not described for brevity.

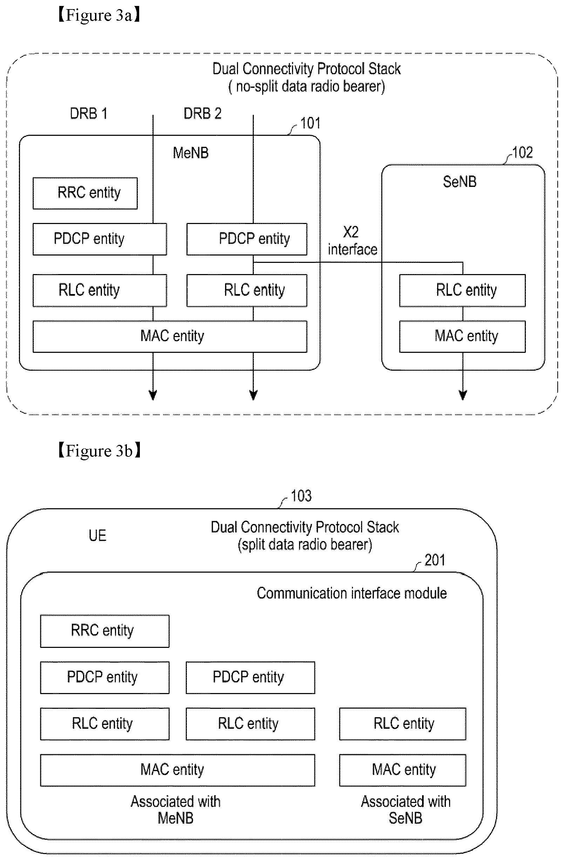

In dual connectivity mode of operation of the UE 103 there are two User Plane (UP) stacks, one belongs to MeNB 101 and another belongs to SeNB 102 as shown in FIG 2b. One can be referred as a primary stack and other can be a secondary stack. The primary stack has configuration which is associated with the MeNB or to eNB which has PCell 104 configured. The secondary stack has the configuration associated with the SeNB or SCell 105 which does not belong to eNB which has PCell 104. Alternatively the other way to configure these two user plane stacks is through the primary PDCP entity and the secondary PDCP entity as split is above PDCP level (in the core network level as shown in FIG 2a). The same would be applicable if split is performed at RLC level (below the PDCP entity at RAN level as shown later in FIG 3a) albeit the PDCP entity is common PDCP entity in the UE as shown in later in FIG 3b. For the handling of radio link problem the UE 103 can follow the legacy procedure if error indications are reported by lower layers of the user plane stack (the MAC entity or the RLC entity associated with MeNB) for the one or more data radio bearers which belong to primary PDCP entity. The new procedure for handling radio link problem proposed in the invention has to be followed if error indications are reported by lower layers of the user plane stack (the MAC or the RLC entity associated with MeNB) for the one or more data radio bearers which belongs to secondary PDCP entity or the common PDCP entity.

FIG. 3a illustrates dual connectivity protocol stack in the MeNB and the SeNB for split data radio bearer implementation wherein the DRB 1 is handled by MeNB 101 and the DRB 2 also handled by MeNB 101 is split at the MeNB in the radio access network, according to embodiments as disclosed herein. FIG. 3b illustrates the dual connectivity protocol stack in the UE for split data radio bearer implementation, according to embodiments as disclosed herein. Based on the dual connectivity protocol stack implementation in the UE 103, the MeNB 101 and the SeNB 102 the method provides various embodiments for handling RLF on data bearer between the UE 103 and the SeNB 102 at various entities of the protocol stack and are described in later part of the description.

The FIG. 3a depicts the dual connectivity protocol stack in accordance with the 3GPP specifications for split bearer implementations in the MeNB 101. Based on the dual connectivity protocol stack implementation in the UE 103, the MeNB 101 and the SeNB 102 the method provides various embodiments for handling RLF on data bearer between the UE 103 and the SeNB 102 by various entities of the protocol stack and are described later in later part of the description.

As described in FIG. 2a the RRC entity resides only in the MeNB 101 for dual connectivity. Also, for split bearer implementation as shown in FIG. 3a the RRC entity resides only in the MeNB 101 since it is the mobility anchor. However in the MeNB 101 there are two separate PDCP entities each associated with the DRB 1 and DRB 2 handled by the MeNB. The DRB 1 is not split whereas the DRB2 is split in the MeNB 101 below the PDCP entity and some PDCP PDUs of DRB 2 are handled by the user plane protocol stack of MeNB 101 and some PDCP PDUs of DRB 2 are handled by the user plane protocol stack of the SeNB 102 respectively. The DRB 2 is split below the PDCP entity residing in the MeNB 101 and hence the PDCP entity handling DRB2 is a common PDCP entity corresponding to the MeNB 101 and SeNB 102. Thus, protocol stack of the SeNB 102 includes the RLC entity and the MAC entity for DRB 2. The MAC entity in MeNB 101 is common entity handling DRB1 and split DRB 2 whereas the RLC entity is independent for DRB 1 and split DRB2.

FIG. 3b depicts dual connectivity protocol stack in accordance with the 3GPP specifications for split bearer implementations in the UE 103. The communication interface module 201 in the UE 103 includes two set of protocol stack. The protocol stack for the data radio bearer associated with MeNB 101 (DRB 1) includes the RRC entity, the PDCP entity, the RLC entity and the common MAC entity. Also, the protocol stack for the split data radio bearer associated with the MeNB 101 (DRB 2) is handled by the PDCP entity also associated with the SeNB 102 called the common PDCP entity. The protocol stack associated with the SeNB 102 for handling the split data radio bearer associated with SeNB 102 (DRB 2) includes the RLC entity, the MAC entity and the common PDCP entity.

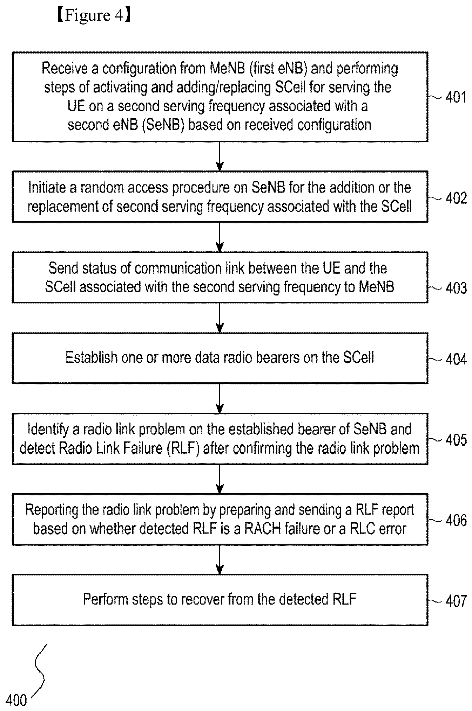

FIG. 4 is a flow diagram illustrating a method 400 for configuring the UE for dual connectivity mode of operation and subsequently initiating a random access procedure on the SeNB during an addition or a replacement of a Secondary Cell (SCell) of the SeNB. Further, a Radio Link problem, if occurred, on a data radio bearer of the SCell of the SeNB is handled, according to embodiments as disclosed herein.

The method 400 explains the process of addition or replacement of only one SCell associated with SeNB 102 for ease of understanding. However, it is understood by a person having ordinary skill in the art that with suitable modifications the method can be applied for addition or replacement of plurality of SCells of SeNB 102, when the UE 103 is within the coverage of those respective SCells.

For example, the UE 103 currently served by only the PCell 104 associated with the MeNB 101 and served by a carrier frequency from the first set (i.e in this case the first frequency) can add only the SCell 105 associated with the SeNB 102 and served by a carrier frequency from the second set (i.e in this case the second carrier frequency) to operate in dual connectivity mode of operation. As there is only one SCell 105 associated with the SeNB 102, the SCell 105 is provisioned with PUCCH resource configuration.

However, upon successful addition of the SCell 105 with PUCCH configuration, the UE 103 is currently being served by the PCell 104 from the MeNB 101 and the SCell 105 with PUCCH configuration from the SeNB 102. The SCell 105 which is the current serving SCell of the SeNB 102 can be replaced with another SCell (for example, the suitable candidate SCell such as SCell 106 provisioned with PUCCH resources) which may belong to the same SeNB 102 or some other SeNB. The replacement of SCell 105 may be due several reasons like the UE is losing coverage of SCell 105 or the PUCCH resource load on the SCell is high.

In another situation, whenever the UE 103 is being served by the PCell 104 from the MeNB 101 and the SCell 105 with PUCCH configuration from the SeNB 102, the UE 103 can be additionally served by a SCell assigned with a different frequency from the second set of frequencies by adding the SCell 106 of SeNB 102. In this case, the SCell 106 to be added is a SCell without PUCCH configuration.

In an embodiment, the method allows modification of the configuration of the SCell of the SeNB that currently serves the UE 103. However, the modification indicates replacement of the current serving SCell of the UE with the new SCell belonging to the same SeNB or replacement of the current group of serving SCells of the UE with one or more SCells belonging to a different SeNB through a new configuration received in the RRC connection reconfiguration message. Thus the term replacement and modification can be used interchangeably wherein replacement means removal of the old SCell and addition of the new SCell. In a special case of SCell modification where the current SCell of the UE associated with the SeNB is not replaced with any other SCell through a new configuration received in the RRC connection reconfiguration message, then the SCell configuration is removed and the UE is said to be removed with the SeNB configuration and continue to operate in single connectivity mode of operation with the MeNB.

The steps for the replacement of the SCell are similar to the steps for the addition of the SCell and may involve suitable modifications as understood by a person having ordinary skill in the art. The proposed method describes the steps with reference to addition of the SCell for brevity.

At step 401, the method 400 configures the UE 103 to receive a configuration in downlink direction from the PCell 104 served on the first frequency of the MeNB 101 for addition of the SCell of SeNB 102 associated with the second serving frequency.

In an embodiment, the configuration is received by the UE 103 in the RRC message for adding the SCell (for example SCell 105 of the SeNB). Whenever, the added SCell 105 is the only SCell associated with the SeNB 102, the SCell 105 is provisioned with PUCCH resource configuration.

The provisioning of the PUCCH resources for the SCell 105 to be added is included in the RRC connection reconfiguration message. Further, the method 400 configures the UE 103 to perform plurality of steps to activate the plurality of SCells that have been added based on the RRC connection reconfiguration message. The steps the UE 103 performs to activate the plurality of SCells are based on whether the added SCell is the SCell with PUCCH configuration or the SCell without the PUCCH configuration. After adding the plurality of SCells associated with the SeNB 102, the method 400 configures the UE 103 to establish one or more entities such as the PDCP entity, the RLC entity and the MAC entity of user plane protocol stack associated with the SeNB 102 based on the configuration parameters received in the RRC connection reconfiguration message.

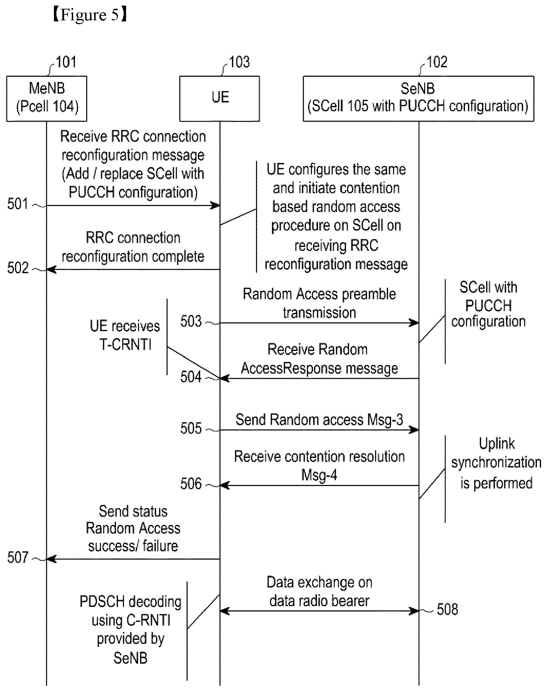

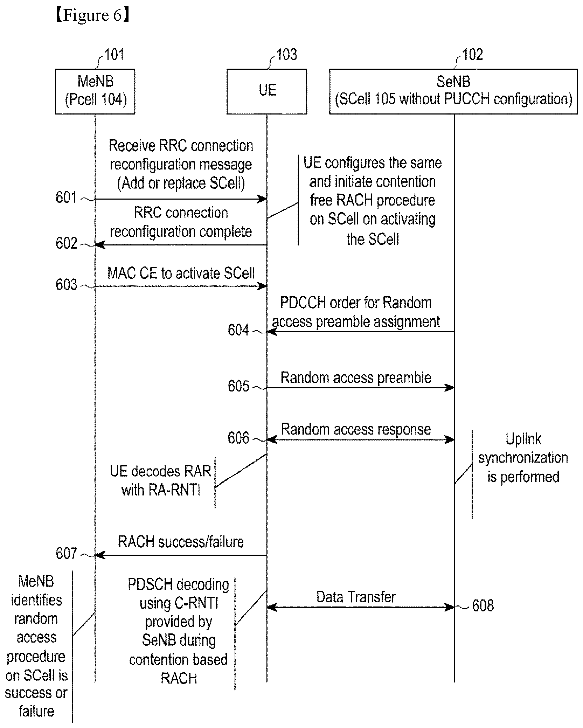

Further, the method 400 configures the UE 103 to send the RRC reconfiguration complete message in the uplink direction to the PCell 104 of the MeNB 101 to indicate comprehending of the SeNB configuration in the UE. The steps are described later in FIG. 5 and FIG. 6. In the example under consideration, the added SCell 105 is the only SCell associated with the SeNB 102 and is provisioned with PUCCH resource configuration so the SCell 105 is activated in the UE 103 based on the RRC reconfiguration message received to add the SCell 105. At step 402, the method configures the UE 103 to initiate the random access procedure on the SCell 105 of the SeNB 102 to achieve uplink synchronization with the SeNB 102.

In the general case, the method configures the UE 106 to identify whether the added SCell is the SCell with PUCCH configuration based on whether the RRC connection re configuration message received by the UE 103 includes provisioning of the PUCCH resources on the SCell to be added. In case, when the added SCell 105 is SCell with PUCCH configuration the method configures the UE 103 to autonomously initiate the a contention based random access on the SeNB 102 associated with the SCell 105.

In an embodiment, the UE 103 can be configured to initiate a contention based random access on SeNB 102 when the added SCell 105 is with PUCCH configuration.

In yet another embodiment, the UE 103 can be configured to initiate a contention free random access on SeNB when the added SCell 105 is with PUCCH configuration.

In case, when an additional SCell is to be added, when the UE 103 is already being served by SCell 105 with PUCCH configuration, then the added SCell such as SCell 106 is the SCell without the PUCCH configuration. In another case, when more than one SCell is added (a group of SCells belonging to the SeNB 102) through the RRC reconfiguration message, then at most one SCell 105 is provisioned with PUCCH resource configuration whereas the other added SCells like SCell 106 are without PUCCH resources. The method 400 configures the UE 103 to initiate the contention free random access on the SeNB 102 associated with the SCell 106.

The steps for the contention based random access on SCell 105 with PUCCH configuration and the contention free random access on SCell 106 without PUCCH configuration are described later in FIG. 5 and FIG. 6 respectively.

In the example under consideration, the contention based random access is autonomously performed by the UE 103 for uplink synchronization towards the activated SCell 105 with the PUCCH configuration.

In an embodiment, the contention based random access is autonomously performed by the UE 103 towards the SCell 105 with the PUCCH configuration of the SeNB 102 to achieve uplink synchronization for the first time when the SCell 105 is added and activated. The autonomous initiation of the contention based random access is triggered due a downlink data arrival notification or an uplink data transmission towards the SeNB 102.

At step 403, the method 400 configures the UE 103 to send status of communication link between the UE 103 and the SCell 105 to MeNB 101. In case the contention based random access procedure initiated at step 403 on the SCell 105 of the SeNB 102 is successful, the method 400 configures the UE 103 to send a success cause value in the status to the MeNB 101. In case the contention based random access procedure initiated at step 403 on the SCell 105 of the SeNB 102 is unsuccessful, the method 400 configures the UE 103 to send a failure cause value in the status to the MeNB 101.

In an embodiment, the status of the contention based random access procedure on the activated SCell with PUCCH configuration can be sent in a RRC connection re-configuration complete message or a new dedicated RRC message. If the status is sent in a new dedicated RRC message then the RRC connection reconfiguration complete message is sent after addition of the SCell as explained at step 401, otherwise the RRC connection reconfiguration complete message is sent at step 403.

Upon successful completion of the random access procedure, at step 404, the method 400 configures the UE 103 to establish one or more data radio bearers on the SCell 105 of the SeNB 102. The one or more data radio bearers are established based on a data radio bearer configuration received in the RRC connection reconfiguration message received at step 401. Further, the method 400, configures the UE 103 to perform data exchange on the established one or more data radio bearers. While data is exchanged on one or more data radio bearers between the UE 103 and SeNB 102, the uplink synchronization is performed towards the activated SCell 105 with the PUCCH configuration when the uplink synchronization is lost by the UE 103 and there is a trigger for a downlink data arrival or an uplink data transmission. The uplink synchronization can be lost by the UE 103 due to expiry of associated timing advance timer (TAT).

Further, at step 405, the method 400 configures the UE 103 to identify the radio link problem on the data radio bearer established on the SCell 105 of the SeNB 102 and detect the RLF after confirming the radio link problem.

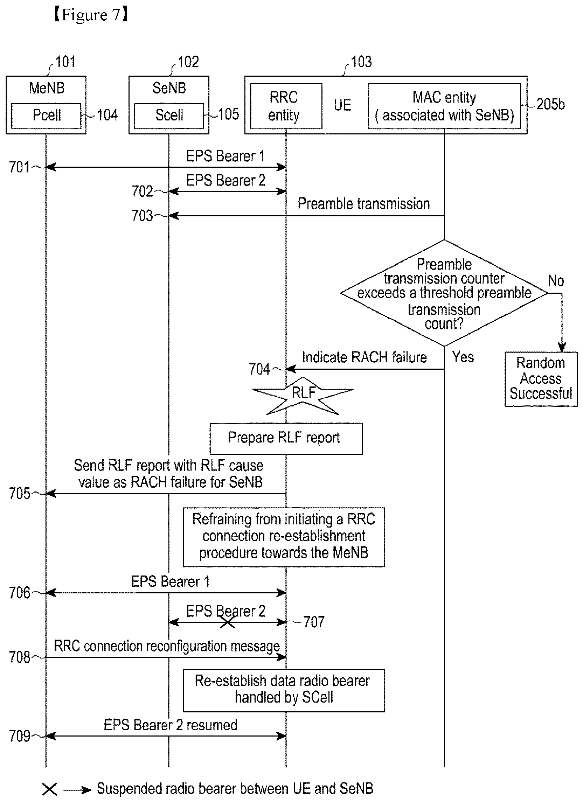

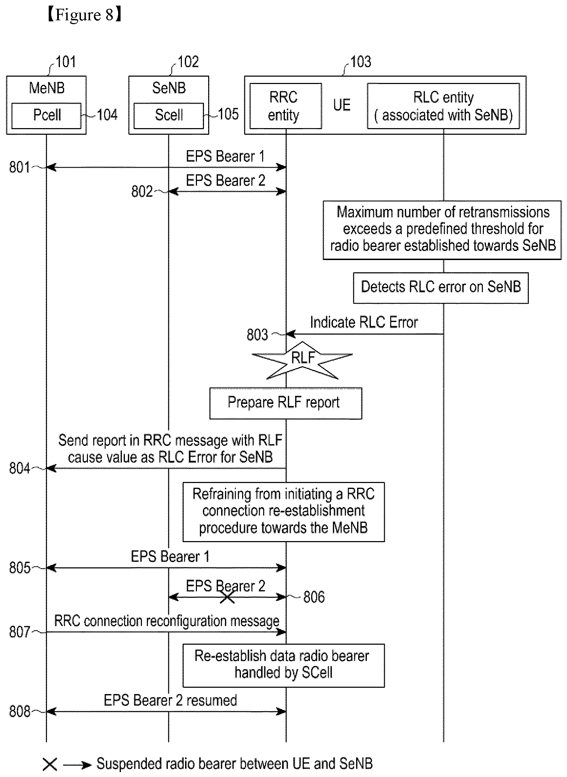

The identification and confirmation of the radio link problem is described in detail later in FIG. 7 and FIG. 8.

In an embodiment, the identified radio link problem can be the Random Access Channel failure (RACH failure) on the SCell 105 with PUCCH configuration identified by the MAC entity in the UE 103, when the contention based random access procedure on the SCell 105 is unsuccessful.

In an embodiment, the identified radio link problem is the Radio Link Control error (RLC error) identified by the RLC entity associated with SeNB 102 in the UE 103 on the uplink data radio bearer established on the SCell 105. However, the method configures the UE 103 to identify the RLC error on any other SCell of SeNB 102 on which uplink data radio bearer is established where the SCell serving the UE 103 is a SCell without PUCCH resources like SCell 106.

At step 406, the method 400 configures the UE 103 to confirm the identified radio link problem as Radio Link Failure (RLF) and report the RLF to the MeNB 101 in uplink direction on the serving frequency (first serving frequency) assigned to the PCell 104 for serving the UE 103. The reporting of RLF includes preparing and sending the RLF report to the MeNB 101. The contents of the RLF report are based on whether detected RLF is the RACH failure or the RLC error. The RLF report includes one or more parameters such as connectionFailureTypeField set to RLF-SeNB, cause value field set to the RLC error or the RACH failure and so on which are described later in FIG. 7 and FIG. 8. The parameters in the RLF report indicate the MeNB 101 about the type of RLF encountered by the UE 103 when served by the serving frequency (second serving frequency) assigned to the SCell associated with the SeNB 102.

In an embodiment, the RLF report is sent to the MeNB 101 in the new dedicated RRC message, an existing RRC message, a new Medium Access Control Element (MAC CE), a new Packet Data Control Protocol (PDCP) Protocol Data Unit (PDU) or similar suitable messages.

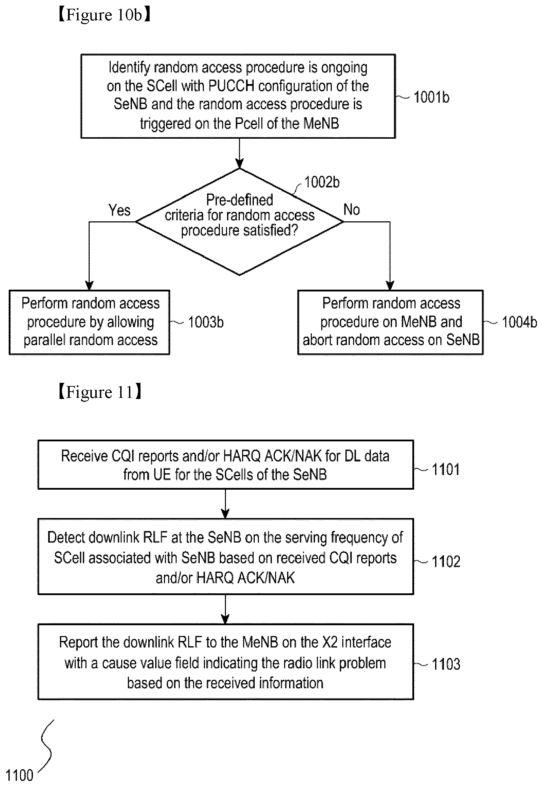

In an embodiment, the reporting of the detected RLF to the MeNB 101 is performed at the PDCP entity level of the UE 103 using the new PDCP PDU and is described in detail in FIG. 11.

In an embodiment, the reporting of the encountered RLF-SeNB to the MeNB 101 by the UE 103 further refrain the UE 103 from initiating a RRC connection re-establishment procedure towards the MeNB 101. The UE 103 therefore continues to perform data exchange with the MeNB 101 for the data radio bearers established on the MeNB even though a RLF was detected on the SCell of the SeNB 102. By refraining to initiate the RRC connection reestablishment procedure towards the MeNB 101 when RLF-SeNB is encountered the service interruption is avoided.

When the radio link problem on the data radio bearer established on the PCell 104 of the MeNB 101 is identified and after confirming the radio link problem the RLF-MeNB is detected, the UE 103 can follow the legacy procedure if error indications are reported from lower layers such as the MAC entity or the RLC entity in the UE 103 associated with the MeNB 101. The legacy procedure involves the RRC connection re-establishment procedure triggered by the RRC entity in the UE 103.

In the dual connectivity mode operation of UE 103 in the wireless network 100 there is need to identify the SCell association in UE by the RRC entity for handling RLC error reported from lower layers of the user plane stack. The UE 103 can follow the legacy procedure (for RRC connection re-establishment) if the RLC error occurs on data radio bearers established on SCell associated with MeNB which also has PCell. If eNB handling SCell is different from the eNB handling PCell (in case of inter-eNB carrier aggregation) and when RLC error reported from lower layer then UE 103 cannot reuse the legacy procedure as it will lead to interruption of service on the PCell 104.

In an embodiment, for the no-split data radio bearer dual connectivity protocol stack implementation as described in FIG. 2a and FIG. 2b, after sending the RLF report to the MeNB 101 the UE 103 suspends the RLC entity and the PDCP entity which handles one or more data radio bearers associated with the SeNB 102. Further, the UE 103 resets the MAC entity associated with the SeNB 102 and stops monitoring of the PDCCH and stops uplink transmissions towards the SeNB 102.

In an embodiment, for the split bearer data radio bearer dual connectivity protocol stack implementation as described in FIG. 3a and FIG. 3b, after sending the RLF report to the MeNB 101 the UE 103 suspends the RLC entity which handles data radio bearer associated with the SeNB 102 while maintaining operation of the common PDCP entity handling the split data radio bearer associated with MeNB 101 and SeNB 102. This ensures that the on-going service on the MeNB 101 is unaffected. Further, the UE 103 resets the MAC entity associated with the SeNB 102. The resetting of the MAC entity enables stopping monitoring of the PDCCH and stopping the uplink transmissions towards the SeNB.

In an embodiment, the reporting of the RLF-SeNB to the MeNB 101 and suspending the protocol stack associated with the SeNB enables the UE 103 to prevent interruption of data on the MeNB 101, effectively preventing any loss of data on the MeNB 101.

At step 407, the method 400 configures the UE 103 to perform steps to recover from the RLF-SeNB encountered by the UE 103. The method configures the UE to receive a message from the MeNB 101 in response to the RLF report sent by the UE 103. The method 400 configures the UE 103 to receive the response message to the RLF report from the RRC entity of the MeNB 101.

In an embodiment, the response is received in the RRC connection reconfiguration message. The response to the RLF report indicates the recovery actions to be performed by the UE 103 to recover from the RLF-SeNB. Further, the recovery actions include configuring the UE 103 to re-establish the data radio bearer associated with the SeNB 102 based on radio bearer re-configuration parameters received in the RRC connection re-configuration message in downlink direction from the PCell 104 of the MeNB 101. The RRC connection re-configuration message includes replacement of the SCell associated with the SeNB 102 or complete removal of the SeNB configuration.

In an embodiment, upon reception of the RRC connection reconfiguration message, the method 400 configures the UE 103 to perform the random access procedure for uplink synchronization towards one of the suitable candidate SCell of the SeNB 102 or a suitable SCell of another candidate SeNB. The replaced suitable SCell is a SCell with the PUCCH configuration on which the data radio bearer associated with the SeNB 102 for which RLF was encountered can now be re-established.

In an embodiment, the RRC connection reconfiguration message includes radio reconfiguration parameters indicating the UE 103 to perform one or more actions (recovery actions) including but not limited removing configuration of the suspended data radio bearer associated with the SeNB 102 and applying the new configuration received in the RRC connection reconfiguration message for re-establishing the data radio bearer. Further, one or more actions include but are not limited to replacing, in the general case plurality of SCells and in a particular case the SCell 105 provisioned with the PUCCH resources with any suitable candidate SCell of the SeNB 102 or any other suitable one or more SCells of any other suitable candidate SeNB in the wireless network 100.

In another embodiment, recovery action includes configuring the UE 103 to deactivate the SCell 105 on which the RLF was detected.

In an embodiment, recovery action includes configuring the UE 103 to remove the configuration associated with the SeNB 102 when the re-configuration parameters received in the RRC connection re-configuration message do not include either a suitable replacement candidate SCell or a another suitable candidate SeNB. In this case the data radio bearers are then re-established on the MeNB 101.

The process associated with removing of the configuration associated with the SeNB 102 include removing the PDCP entity, the RLC entity and the MAC entity of the UE 103 associated with the SeNB 102 for the no-split radio bearer implementation of dual connectivity protocol stack. In the case of split radio bearer implementation of dual connectivity protocol stack the process associated with removing of the configuration associated with the SeNB 102 include removing the RLC entity and the MAC entity of the UE 103 associated with the SeNB 102. Further, method 400 configures the UE 103 to remove configuration of one or more suspended data radio bearer and apply new configuration for re-establishing one or more suspended data radio bearer either on suitable candidate SCell of SeNB 102 or any other suitable candidate SeNB or the MeNB 101 itself.

In an embodiment, the one or more suspended data radio bearer may be re-established on the PCell 104 of the MeNB 101 or a candidate serving cell of the MeNB (for example SCell 107 of the MeNB 101) based on the radio bearer re-configuration parameters received in the RRC connection re-configuration message in downlink direction from the MeNB 101. The suspended one or more data radio bearer is re-established after removing current configuration of the suspended data radio bearer and applying new configuration received in the RRC connection reconfiguration message for re-establishing the suspended data radio bearer.

In an embodiment, the suspended one or more data radio bearer is resumed by replacing the SCell 105 with the PUCCH configuration with the suitable candidate SCell of the SeNB 102 or the suitable SCell of any other suitable candidate SeNB. The resuming of data radio bearer includes re-establishing the RLC entity and the PDCP entity in the UE 103 for the no-split radio bearer implementation of dual connectivity protocol stack. In the case of split radio bearer implementation of dual connectivity protocol stack the resuming of data radio bearer includes re-establishing the RLC entity in the UE 103. The replaced suitable candidate SCell is provisioned with PUCCH resources based on the PUCCH resource configuration included in the RRC connection re-configuration message in downlink direction from the MeNB 101.

The various actions, acts, blocks, steps, and the like in method 400 may be performed in the order presented, in a different order or simultaneously. Further, in some embodiments, some actions, acts, blocks, steps, and the like may be omitted, added, modified, skipped, and the like without departing from the scope of the invention.

FIG. 5 is an example sequence diagram illustrating the initiation of the random access procedure after the addition or the replacement of the SCell with a Physical Uplink Control Channel (PUCCH) configuration, according to embodiments as disclosed herein. The FIG. 5 depicts the PCell 104 of the MeNB 101, the UE 103 and the SeNB 102 with the SCell 105 with PUCCH configuration. The UE 103 performs the contention based random access procedure towards the SeNB 102 after the addition of the SCell 105 or replacement of the SCell with PUCCH configuration based on the received RRC connection reconfiguration message. The steps for replacement of the current serving SCell provisioned with PUCCH configuration with another suitable SCell with PUCCH configuration are similar to steps shown for addition or may include suitable modifications and are not repeated for brevity.

The UE receives (501) the RRC connection reconfiguration message for either addition or replacement of SCell with PUCCH configuration associated with the SeNB 102. The UE 103 comprehends with the configuration received in the RRC connection reconfiguration message by applying the configuration and adding the SCell 105 associated with SeNB 102 provisioned with PUCCH configuration assigned with a second serving frequency (a frequency from a second set of serving frequencies). The serving frequency of SCell 105 is different from the serving frequency of PCell 104 since the PCell serving is assigned from the first set of serving frequencies. The RRC connection reconfiguration message provisions one or more data radio bearer configurations for one or more data radio bearers to be established on the SCell 105 with the PUCCH configuration, configuration parameters for establishing lower layer entities and a Temporary C-RNTI to be used for the second eNB. Further, the UE 103 after adding the SCell 105 based on the RRC connection reconfiguration message received from the PCell 104 sends (502) a RRC connection reconfiguration complete message in uplink direction to the PCell 104 of MeNB 101 to indicate that the UE 103 comprehends to the configuration.

In an embodiment, the MeNB 101 may optionally provide the Temporary C-RNTI (T-CRNTI) to the UE 103 in the MAC CE. In another embodiment, the MeNB 101 also informs addition and activation of the SCell in the UE 103 to the SeNB 102 and forwards the T-CRNTI provided to the UE along with a SAE Temporary Mobile Subscriber Identity (S-TMSI) of the UE on the X2 interface.

In an embodiment, a new Information Element (IE) can be added by PCell 104 along with data radio bearer information. The PCell 104 could add new IE along with bearer information during set up of data radio bearer whether it belongs to MeNB 101 or SeNB 102. The IE for data radio bearer information can be defined associated with the MeNB 101 or primary eNB or first eNB where primary eNB is the eNB which has the PCell 104. The IE for data radio bearer information can be defined associated with the SeNB 102 or secondary eNB or second eNB. Another way to define the IEs can be based on master or slave IEs, where master IE belongs to MeNB 101 and slave IE can be associated with the SeNB 102. This enables the UE to identify whether particular set of bearers belongs to MeNB or SeNB.

In another embodiment, the data radio bearer configuration included in the RRC reconfiguration message from the PCell includes separate information elements (IEs) for the one or more data radio bearers to be established on the MeNB and the SeNB. For example, the PCell 104 may include new IE primary-drb-ToAddModList and secondary- drb-ToAddModList. The primary-drb-ToAddModList is the data radio bearer configuration which belongs to MeNB 101 or to the first eNB to which the PCell 104 belongs and includes the radio bearer identity and mapping with the EPS bearer. The secondary-drb-ToAddModList is the data radio bearer configuration which belongs to SeNB 102 or to the second eNB which the SCell 105 and/or 106 belongs and includes the radio bearer identity and mapping with the EPS bearer.

The UE 103 then activates the SCell 105 within the UE 103 based on the received RRC connection reconfiguration message (501). For the first time when the SCell 105 is added and activated, then on activation of the SCell 105, the UE 103 (specifically the MAC entity associated with SeNB 102 within the UE 103) autonomously initiates the contention based random access procedure towards the activated SCell 105 for uplink synchronization towards the SeNB 102.. The autonomous initiation of the contention based random access is triggered due a downlink data arrival notification or an uplink data transmission towards the SeNB 102. The contention based random access procedure is performed by the UE 103 by initiating transmission (503) of a randomly selected Random Access (RA) preamble on a determined Physical Random Access Channel (PRACH) resource of the SCell 105 associated with SeNB 102. Further, the UE 103 monitors a common search space of a Physical Downlink Control Channel (PDCCH) region of the SCell 105 associated with SeNB 102 for reception of a Random Access Response (RAR) message. The UE 103 receives (504) the RAR message in downlink direction from the SCell 105 and the UE 103 decodes the RAR message using a Random Access Radio Network Temporary Identifier (RA-RNTI) associated with the determined PRACH. After decoding the RAR message received at step 504 the UE 103 receives an uplink grant, a random access preamble identifier, optionally a Temporary C-RNTI and uplink timing advance information in response to the RA preamble transmission at step 503. The uplink grant is then used by the UE 103 to send a message for contention resolution (message-3) and the uplink timing advance information is used for the uplink synchronization towards the SeNB 102. The UE 103 sends (505) a message for contention resolution (random access message-3) containing a UE identity for contention resolution in uplink direction based on the uplink grant provided in the RAR message (504). The UE identity may be the T-CRNTI either received in RRC connection reconfiguration message at step501 and/or the one received in RAR message at step504 or some other identity randomly selected by the UE. The UE 103 receives (506) a contention resolution message (random access message-4) in downlink direction from the SeNB 102 for resolving the contention by decoding the contention resolution message using the Temporary C-RNTI and receiving back the same UE identity sent by the UE 103 in the in the request message (random access message-3).

In an embodiment, the Temporary C-RNTI is received in the RRC reconfiguration message and/or the RAR message.

After receiving the contention resolution message at step 506, the UE 103 completes the random access procedure successfully. There is a possibility that the after transmitting the RA preamble at step503 multiple times the UE does not receive the RAR message at step504. Depending on the success or failure of the random access procedure towards the SeNB 102 the UE 103 sends (507) the status of the random access procedure to the MeNB 101.

In an embodiment, the status of the random access procedure can be sent in a new dedicated RRC message or existing message. The status message sent at step 507 to the PCell 104 of MeNB 101 may be sent in a new dedicated RRC message.

In an embodiment, if the RRC connection re-configuration complete message is used to send the status of the random access procedure then the transmission of RRC connection reconfiguration complete message is not done at step 502. In this case, the transmission of the RRC connection re-configuration message is delayed till the reception of the contention resolution message at step 506. In this case the UE 103 can send the status of the random access procedure in the RRC connection reconfiguration complete message at step 507.

The status is provided using the cause value indicating success or failure of the random access procedure initiated by the UE 103 towards the SeNB 102. If the random access procedure is success, the success cause value is sent in the status. Further, the UE 103 sets a C-RNTI to the value of the Temporary C-RNTI received in the RRC connection reconfiguration message at step501 and/or in the RAR message at step 504 after the UE 103 successfully receives the contention resolution message at step (506. The C-RNTI is used by the UE 103 for the data exchange with the SeNB 102 and it is different from the C-RNTI allocated to the UE by the MeNB 101 for the data exchange with the MeNB 101. Further, the UE 103 establishes one or more data radio bearers on the SCell 105 with the PUCCH configuration based on the data radio bearer configuration received in the RRC connection reconfiguration message at step501. The data radio configuration (secondary-drb-ToAddModList) includes a data radio bearer identity corresponding to the data radio bearer established on the SCell 105 with the PUCCH configuration associated with the SeNB 102. The data radio bearer identity is unique for data radio bearers established on the MeNB 101 and the SeNB 102 respectively. Further, the UE 103 performs (508) data exchange on the established one or more data radio bearers using the C-RNTI which is set to value of the Temporary C-RNTI received in the RRC connection reconfiguration message at step 501 and/or in the RAR message at step 504 . The decoding of the Physical Downlink Shared Channel (PDSCH) scheduled by the SeNB on the second serving frequency associated with SCell 105 is done using C-RNTI associated with SeNB 102 and different from the C-RNTI associated with the MeNB 101.

While performing data exchange with the SeNB 102, the UE 103 may initiate the contention based random access procedure when the UE 103 looses uplink synchronization towards the SCell with the PUCCH configuration and there is a trigger for either a downlink data arrival or an uplink data transmission. The UE follows steps 503 to step 506 of the random access procedure and depending on the status of the random access (RACH) procedure a status message is sent to the MeNB 101. The sending of the failure status of the RACH is mandatory whereas the sending of the success status of the RACH is optional. The RACH failure is detected as RLF and the step 507 of FIG 5 corresponds to step 406 of FIG 4. On receiving the RACH failure status the MeNB 101 invokes the recovery procedure as shown in step 407 of FIG 4.

FIG. 6 is an example sequence diagram illustrating the initiation of the random access procedure after the addition or the replacement of the SCell without the PUCCH configuration, according to embodiments as disclosed herein. The FIG. 6 depicts the PCell 104 of the MeNB 101, the UE 103 and the SeNB 102 with the SCell 106 without the PUCCH configuration. The UE 103 performs the contention free random access procedure after the addition of the SCell 106 without the PUCCH configuration when the UE 103 is already currently served by SCell 105 with PUCCH configuration associated with the SeNB 102.

If the time advance group (TAG) of the SCell 105 and SCell 106 is different then only the random access procedure can be performed on SCell 106. If based the RRC connection reconfiguration message (601) while adding the SCell 106 if the configuration indicates the SCell 106 belongs to the same TAG as that of SCell 105 then there is no need to perform the random access procedure on SCell 106. In this case based on the random access procedure on the SCell 105 (explained in FIG 5) the uplink timing information received in RAR message (504) is also applied for SCell 106 for achieving uplink synchronization.

The FIG. 6 considers an example when the SCell 105 with PUCCH configuration and the SCell 106 without PUCCH configuration belong to different TAG. The SCell 106 to be added is the SCell without PUCCH resources and hence after addition is performed the initiation of contention free random access procedure on the SeNB 102 associated with the SCell 106 is explained in the following. The UE 103 receives (601) the RRC connection reconfiguration message indicating addition of the SCell 106 without PUCCH resources associated with the SeNB 102. The UE 103 comprehends (applies the configuration) and adds the SCell 106 assigned with one of the serving frequency from the second set of frequencies based on the received RRC connection reconfiguration message. The RRC connection reconfiguration message provisions data radio bearer configuration for one or more data radio bearers to be established on the SCell without the PUCCH configuration, configuration parameters for establishing lower layer entities and the Temporary C-RNTI to be used for the SeNB 102. The serving frequency of SCell 106 is different from the serving frequency of SCell 105 even though they are assigned from the second set of serving frequencies. After adding the SCell 106, the UE 103 establishes the PDCP entity or the RLC entity of the user plane protocol stack associated with the SeNB 102 based on the configuration parameters received in the RRC connection reconfiguration message. Further, the UE 103 sends (602) the RRC connection configuration complete message in uplink direction to the PCell 104 of MeNB 101 to indicate that the UE 103 comprehends to the configuration. The SCell 106 without the PUCCH configuration is activated in the UE 103 only after reception of MAC CE from the MeNB 101. The MAC CE to activate the SCell 106 can also be received from the SCell 105 of the SeNB 102. The UE 103 receives (603) the MAC CE to activate the SCell 106. Upon reception of the MAC CE the SCell is activated by the UE 103 for establishment of one or more data radio bearers on SCell 106 based on the data bearer configuration parameters received in RRC connection reconfiguration message at step 601. The data radio bearer configuration parameters included in the RRC reconfiguration message from the PCell 104 includes secondary-drb-ToAddModList for one or more data radio bearers and the unique identity of respective bearers to be established on the SCell 106 of the SeNB 102.

In an embodiment the MAC CE to activate the SCell without PUCCH configuration in the UE can be received either from the PCell of the MeNB or the activated SCell with PUCCH configuration of the SeNB

The contention free random access procedure may be performed on the activated SCell 106 when the TAG of SCell 106 is different from the TAG of the SCell 105 and initiated with the transmission of PDCCH order from the wireless network node.

In an embodiment, the SeNB 102 sends (604) a PDCCH order on the current serving SCell 105 to the UE 103 to allow the UE to initiate the contention free random access towards the SeNB 102.

In another embodiment, the MeNB 101 can send the PDCCH order to the UE 103 on the current serving PCell 104 to allow the UE to initiate the contention free random access procedure towards the SeNB 102.

In the PDCCH order, the UE 103 is provided with a dedicated Random Access (RA) preamble that can be used for transmission towards the activated SCell 106 of the SeNB 102 on a determined PRACH resource.

After reception of the PDCCH order, the UE 103 initiates (605) transmission of the assigned RA preamble (dedicated RA preamble) towards the SCell 106 of the SeNB 102 on the determined PRACH resource.

The UE 103 monitors the common search space of PDCCH region of the SCell 105 with PUCCH configuration associated with SeNB 102, which is the currently serving SCell of the UE 103, for the RAR message reception (606) from the SeNB 102.

The UE 103 decodes the RAR message received in downlink direction from SeNB 102 using the RA-RNTI associated with the PRACH. The RAR message includes an uplink grant and/or an uplink timing advance information in response to the assigned RA preamble transmission. After receiving the RAR message at step 606, the UE 103 completes the random access procedure successfully. There is a possibility that the random access procedure may fail especially during step 605 and step 606 where after transmitting RA preamble at step 605 multiple times the UE does not receive RAR message at step 606. Depending on the success or failure of the random access procedure towards the SeNB 102 the UE 103 further, sends (607) status of the random access procedure to the MeNB 101 in the RRC connection re-configuration complete message or the new dedicated RRC message indicating the success and failure cause value.

After successful completion of contention free random access procedure on SCell 106 of SeNB 102, the UE 103 establishes one or more data radio bearers on the activated SCell 106 based on the data radio bearer configuration received in the RRC connection reconfiguration message at step 601. Further, the UE 103 performs (608) data exchange on the established data radio bearers wherein the decoding of the Physical Downlink Shared Channel (PDSCH) scheduled by the SeNB on the second serving frequency associated with SCell 106 is done using the C-RNTI allocated to the UE 103 during previous contention based random access procedure towards the SCell 105 of the SeNB 102.

FIG. 7 is an example sequence diagram illustrating handling of a Random Access Channel (RACH) failure, according to the embodiments as disclosed herein. The FIG. 7 depicts the MeNB 101 with the PCell 104, the SeNB 102 with the SCell 105, the UE 103 with the RRC entity and the MAC entity associated with SeNB. The FIG. 7 depicts the UE 103 being configured for dual connectivity mode of operation wherein the UE 103 is served by two cells with an established data radio bearer mapped to the EPS Bearer 1 701 on the PCell 104 of the MeNB 101 assigned with a first serving frequency. Another data radio bearer mapped to the EPS Bearer 2 702 is established on the SCell 105 with PUCCH configuration of SeNB 102 assigned with the second serving frequency.

While data is exchanged on the data radio bearer 702 established between the UE 103 and SeNB 102, the uplink synchronization is performed towards the activated SCell 105 with the PUCCH configuration when the uplink synchronization is lost by the UE 103 and there is a trigger for a downlink data arrival or an uplink data transmission for the data radio bearer 702. The uplink synchronization can be lost by the UE 103 due to expiry of timing advance timer (TAT) associated with the TAG of the SCell 105.

The UE 103 performs (703) preamble transmission towards the SeNB 102 (This step is same as step 503 of FIG 5). The MAC entity of the UE 103 checks whether the preamble transmission counter exceeds a threshold preamble transmission count. If it is determined that the preamble transmission counter is within the pre-defined preamble transmission count, then the random access procedure continues with step 504, 505 and 506 of FIG 5 and is completed successfully. However, if it is determined that the preamble transmission counter exceeds the pre-defined preamble transmission count then the random access procedure is unsuccessful. If the random access procedure is unsuccessful, the MAC entity in the UE 103 associated with the SeNB 102 indicates (704) the RRC entity of the UE 103 about a radio link problem due to the unsuccessful random access procedure by marking the radio link problem as the RACH failure. The RRC entity in the UE 103 detects the RLF and prepares the RLF report. Further, the RRC entity immediately sends 705 the RLF report concerning the SeNB 102 to the MeNB 101 with RLF cause value as RACH failure. (This step is same as step 507 of FIG 5).

The RLF report prepared by the RRC entity of the UE 103 includes setting the connectionFailureType field to the RLF-SeNB and setting the cause value field to the RACH failure. Further, the RLF report includes measurement results of one or more serving cell of the SeNB 102 tagged with respective Physical Cell Identity (PCI) if the measurement results are available. The measurement results are based on measurements collected up to an instant the UE detects the radio link problem.

Further, the RRC entity in the UE 103 refrains from initiating the RRC connection re-establishment procedure towards the PCell 104 of the MeNB 101. This allows the UE 103 to avoid disruption of the ongoing service on the PCell 104. The recovery actions performed by the UE 103 to recover from the encountered RLF after reporting the RLF are already described in FIG. 4 and are not repeated for brevity. Further, the RRC entity in UE 103 keeps the data radio bearer mapped to the EPS Bearer 1 (706) established and suspends the data radio bearer mapped to EPS Bearer 2 (707). Further, the RRC entity of the UE keeps the configuration associated with the SeNB 102 until it receives (708) a new configuration in the RRC connection reconfiguration message in response to the RLF report sent in step 705. In an example based on the RRC reconfiguration parameters received in the RRC connection reconfiguration message the UE removes the SeNB configuration and re-establishes the data radio bearer handled by SCell 105 on the PCell 104 of the MeNB 101. The recovery actions performed by the UE 103 to recover from the encountered RLF may be based on several other possible reconfiguration parameters as already described in FIG. 4 and are not repeated for brevity.

In an embodiment, the RRC entity in the UE 103 resumes the data radio bearer mapped to the EPS Bearer 2 (709) on PCell 104 of the MeNB 101.

FIG. 8 is an example sequence diagram illustrating handling of a Radio Link Error (RLC) error, according to the embodiments as disclosed herein. The FIG. 8 depicts the MeNB 101 with the PCell 104, the SeNB 102 with one or more SCells such as SCell 105 with PUCCH configuration and SCell 106 without PUCCH configuration, the UE 103 with the RRC entity and the RLC entity associated with SeNB 102. The FIG. 8 depicts the UE 103 being configured for dual connectivity mode of operation wherein the UE 103 is served by two eNBs with an established data radio bearer mapped to the EPS Bearer 1 (801) on the PCell 104 of the MeNB 101 assigned with a first serving frequency. One or more data radio bearer mapped to the EPS Bearer (802) is established on SCell 105 with PUCCH configuration and SCell 106 without PUCCH configuration of SeNB 102 assigned with serving frequencies from the second set.

While data is exchanged on the one or more data radio bearer 802 established between the UE 103 and SeNB 102, the RLC entity of the UE 103 associated with the SeNB 102 identifies that maximum number of RLC retransmissions exceeds a predefined threshold for the uplink data radio bearer (EPS bearer 2) established towards the SeNB 102. The RLC entity of the UE 103 detects the radio link problem as the RLC error for the uplink data radio bearer established on SeNB 102.

The RLC entity associated with the SeNB in the UE 103 indicates (803) the radio link problem due to the RLC error on the uplink data radio bearer by marking the radio link problem as the RLC error to the RRC entity in the UE 103. The RRC entity in the UE 103 detects the RLF and prepares the RLF report. Further, the RRC entity immediately sends the RLF report (804) with RLF cause value as RLC error for the SeNB 102.

The RLF report prepared by the RRC entity of the UE 103 includes setting the connectionFailureType field to the RLF-SeNB and setting the cause value field to the RLC error. Further, the RLF report includes a logical channel identity of the uplink data radio bearer on which the RLC error is detected and measurement results of one or more serving cell of the SeNB 102 tagged with respective Physical Cell Identity (PCI) if the measurement results are available. The measurement results are based on measurements collected up to an instant the UE detects the radio link problem.

Further, the RRC entity refrains from initiating the RRC connection re-establishment procedure towards the PCell 104 of the MeNB 101. This allows the UE 103 to avoid disruption of the ongoing service on the PCell 104. The recovery actions performed by the UE 103 to recover from the encountered RLF after reporting the RLF are already described in FIG. 4 and are not repeated for brevity. Further, the RRC entity in UE 103 keeps the data radio bearer mapped to the EPS Bearer 1 (805) established and suspends the data radio bearer mapped to EPS Bearer 2 (806). Further, the RRC entity of the UE keeps the configuration associated with the SeNB 102 until it receives (807) a new configuration in the RRC connection reconfiguration message in response to the RLF report sent in step 804. In an example, based on the RRC reconfiguration parameters received in the RRC connection reconfiguration message, the UE 103 removes the SeNB configuration and re-establishes radio bearer handled by SeNB 102 on the PCell 104 of the MeNB 101. The recovery actions performed by the UE 103 to recover from the encountered RLF may be based on several other possible reconfiguration parameters as already described in FIG. 4 and are not repeated for brevity.

In an embodiment, the RRC entity in the UE 103 resumes the data radio bearer mapped to the EPS Bearer 2 (808) on PCell 104 of the MeNB 101.

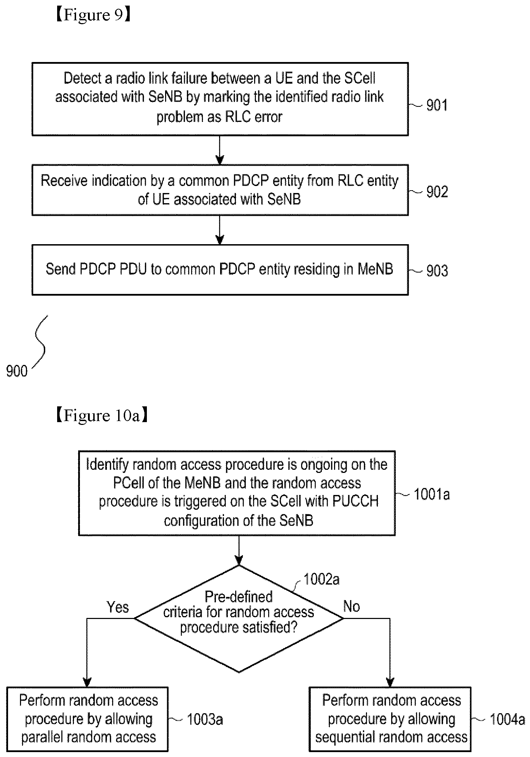

FIG. 9 is a flow diagram illustrating a method for reporting of the radio link problem by a common PDCP entity of the UE when the radio link problem is identified between the UE and the SCell of the SeNB, according to embodiments as disclosed herein. In case of split data radio bearer implementation as described in FIG. 3a and FIG. 3b whenever one or more data radio bearers are established on one or more SCell associated with the SeNB 102, the split data radio bearer is handled by the RLC entity associated with the SeNB in the UE 103 and the common PDCP entity associated with the MeNB 101 and the SeNB 102. The method 900 allows handling RLF at PDCP/RLC level for occurrence of RLF due to the RLC error when the split data radio bearer dual connectivity protocol stack is being implemented.

At step 901, the method 900 configures the UE 103 to detect the radio link failure between the UE 103 and the SCell of SeNB 102 and mark the identified radio link problem as RLC error, when the RLF is detected due to the RLC error. The RLC entity of the UE 103 identifies the RLC error on the uplink data radio bearer when maximum number of retransmissions exceeds a predefined threshold for the data radio bearer. The method 900 configures the UE 103 to mark the radio link problem as the RLC error. At step 902, the method 900 configures the UE 103 to allow the common PDCP entity in the UE 103 to receive an indication from the RLC entity of the UE 103 associated with the SeNB 102 notifying the radio link problem. The indication is received from the RLC entity of the UE 103 after identifying the RLC error for the data radio bearer established in the uplink direction towards the SeNB 102 by the RLC entity of the UE 103.

At step 903, the method 900 configures the UE 103 to allow the common PDCP entity of the UE 103 to report the RLC error to the common PDCP entity residing in the MeNB 101. The common PDCP entity of the UE 103 prepares a PDCP status report that indicates status of PDCP PDUs received by the UE 103 for downlink data radio bearer associated with the SeNB 102 which is handled by the RLC entity of the UE associated with the SeNB 102. The downlink data radio bearer associated with the SeNB 102 is handled by the common PDCP entity associated with the MeNB 101and the SeNB 102. The method 900 configures the UE 103 to send the PDCP status PDU by the common PDCP entity in the UE 103 indicating the RLC error to the common PDCP entity in the MeNB 101 in the uplink direction on the first serving frequency served by the PCell 104.

In an embodiment, the method 900 configures the UE103 to utilize the reserved bit of the PDCP PDU that defines a PDU type for indicating the radio link problem indicating the RLC error.

The method 900 configures the UE 103 to allow the common PDCP entity in the UE 103 to prepare the PDCP status report indicating status of PDCP PDUs received by the UE 103 for a downlink data radio bearer associated with SeNB 102. The common PDCP entity in the UE 103 report the PDCP status report the common PDCP entity residing in the MeNB when there is radio link problem in downlink and/or uplink data radio bearers handled by the RLC entity of the UE associated with the SeNB 102. The downlink and/or uplink data radio bearer is handled by the RLC entity of the UE 103 associated with the SeNB 102 and the common PDCP entity in the UE 103 associated with the MeNB 101 and the SeNB 102.

The various actions, acts, blocks, steps, and the like in method 900 may be performed in the order presented, in a different order or simultaneously. Further, in some embodiments, some actions, acts, blocks, steps, and the like may be omitted, added, modified, skipped, and the like without departing from the scope of the invention.

FIG. 10a and Fig 10b are flow diagrams illustrating a method 1000a and 1000b respectively for performing a random access procedure on the MeNB and the SeNB using either a parallel random access or a sequential random access, according to embodiments as disclosed herein.

In the inter-eNB carrier aggregation when the UE is configured for dual connectivity mode of operation, the UE is allowed contention based random access procedure on the SCell with PUCCH configuration of the SeNB. Thus, there could be scenarios where the UE may be performing two random access procedures in parallel, one on the MeNB and another on the SeNB.

For example, the UE 103 may trigger the random access procedure (contention based random access on the SCell 105 with PUCCH configuration) on the activated SCell 105 associated with the SeNB 102 when the uplink synchronization towards the activated SCell 105 with the PUCCH configuration is lost by the UE 103 and there is a trigger for one of a downlink data arrival and an uplink data transmission. The uplink synchronization may be lost by the UE 103 due to expiry of associated timing advance timer (TAT). Simultaneously, the random access procedure may be ongoing or triggered on the PCell 104, thus two random access procedures are being performed by the UE 103 simultaneously or in parallel. The multiple options arising in above mentioned scenario are handled by the UE 103 as shown in method 1000a and method 1000b.

As shown in FIG. 10a, at step 1001a, the method 1000a configures the UE 103 to identify whether the random access procedure is ongoing on the PCell 104 of the MeNB 101 and the random access procedure is triggered on the SCell 105 with PUCCH configuration of the SeNB 102.

In an embodiment, the random access procedure on the SCell 105 of the SeNB 102 can be triggered by expiry of a Timing Advance Timer (TAT) running for the SCell or unavailability of the Scheduling Request (SR) resource for the UE 103 on the SCell.

At step 1002a, the method 1000a configures the UE 103 to determine whether a pre-defined criterion for random access is satisfied.

An example of pre-defined criteria is the random access procedure on the SCell of SeNB 102 is delayed if trigger for the random access procedure on SCell is due to uplink data and the logical channel priority of the SCell is less than the PCell logical channel priority. Another criterion may be consideration of transmission power required to perform random access procedure and if it determined that there is sufficient transmission power headroom to perform random access procedure on both, the MeNB and the SeNB then the parallel random access is allowed.

In an embodiment the pre-defined criteria may be that random access procedure ongoing on SeNB is contention free random access (on SCell without PUCCH resources) then the contention based random access on the PCell of the MeNB may be delayed.

If at step 1002a it is determined that the predefined criteria for the random access is satisfied, then at step 1003a, the method 1000a configures the UE 103 for the parallel random access procedure to be performed on the MeNB 101 and SeNB 102 respectively. If at step 1002a, it is determined that the predefined criteria for the random access is unsatisfied, then at step 1004a, the method 1000a configures the UE 103 to perform the sequential random access procedure.

The sequential random access procedure allowed by the method 1000a and 1000b configures the UE 103 to complete the ongoing random access procedure on the PCell 104 of the MeNB 101 and delay the initiation of the triggered random access procedure on the SCell provisioned with the PUCCH resources of SeNB 102. This delay is allowed as the random access procedure on the PCell 104 of the MeNB 101 is very important to keep the radio link with the mobility anchor stable and not delaying any UE action triggered towards the PCell 104 of the MeNB 101. Further, the random access procedure on the SCell 105 of the SeNB 102 is performed after successful completion of random access procedure towards the PCell 104. The sequential random access approach reduces UE complexity. However, prioritization of the random access procedure on the PCell is based on the pre-defined criteria.

The various actions, acts, blocks, steps, and the like in method 1000a may be performed in the order presented, in a different order or simultaneously. Further, in some embodiments, some actions, acts, blocks, steps, and the like may be omitted, added, modified, skipped, and the like without departing from the scope of the invention.

As shown in FIG. 10b, at step 1001b, the method 1000b configures the UE 103 to identify whether the random access procedure is ongoing on the SCell 105 with the PUCCH configuration of the SeNB 102 and the random access procedure is triggered on the PCell 104 of the MeNB 101.

In an embodiment, the trigger for the random access procedure on the PCell 104 can be due to either expiry of a Timing Advance Timer (TAT) running for the PCell 104 or unavailability of a Scheduling Request (SR) resource for the UE 103 on the PCell 104.

In an example scenario, the SCell on which the random access procedure is on-going can be the current serving SCell 105 provisioned with the PUCCH configuration. At step 1002b, the method 1000b configures the UE 103 to determine whether the pre-defined criterion for random access is satisfied.

If at step 1002b it is determined that the predefined criteria for the random access is satisfied, then at step 1003b, the method 1000b configures the UE 103 for the parallel random access to be performed on the MeNB 101 and SeNB 102 respectively.

If at step 1002b, it is determined that the predefined criteria for the random access is unsatisfied, then at step 1004b, the method 1000b configures the UE 103 perform random access procedure on MeNB 101 and the on-going random access procedure on the SCell 105 can be aborted whenever random access procedure is triggered on the PCell 104. In another embodiment, the method 1000b configures the UE 103 to complete the ongoing random access procedure (if it is contention free random access) on SeNB 102 and delay the triggered random access procedure on the PCell 104 since it is expected the contention free random access will be completed with less delay compared to the contention based random access.

The various actions, acts, blocks, steps, and the like in method 1000b may be performed in the order presented, in a different order or simultaneously. Further, in some embodiments, some actions, acts, blocks, steps, and the like may be omitted, added, modified, skipped, and the like without departing from the scope of the invention.

In a case with contention based random access procedure on the SCell of the SeNB when the UE needs to initiate random access procedure for UL data arrival case, but the SCell of the SeNB is configured but not yet activated by PCell, then in an embodiment, the UE can autonomously initiate random access procedure on SCell or first request the PCell to activate SCell and then initiate random access procedure.

In an embodiment, the UE is allowed to autonomously initiate contention based random access procedure on the SCell of the SeNB, if the concerned SCell is configured in the list of carriers for inter-eNB carrier aggregation by the PCell.

In an embodiment, the UE first requests the PCell to activate the SCell of the SeNB from the list of configured SCells. In response, the UE receives a MAC CE for activation of the concerned SCell. Optionally, the PCell may send the PDCCH order. If the PDCCH order is received by the UE then it follows contention free random access procedure on SCell Otherwise, the UE initiates contention based random access procedure on the SCell.

FIG. 11 is a flow diagram illustrating a method 1100 for SeNB-based reporting of the radio link problem identified between the UE and the SCell using CQI report and/or HARQ ACK/NAK received from the UE, according to embodiments as disclosed herein.

For dual connectivity when UE is configured with inter-eNB carrier aggregation the Channel Quality Indication (CQI) reports and Hybrid Automatic Repeat Request (HARQ) Acknowledge/Negative-Acknowledgment ACK/NAK indications for downlink data and measurements reports for the second serving frequency assigned to the SCell of SeNB 102 are sent to the SCell of SeNB. The proposed method configures the SeNB 102 to utilize the CQI reports and/or the HARQ ACK/NAK indications to detect the RLF between the UE 103 and SCells associated with the SeNB 102. Further the proposed method configures the SeNB 102 to report the RLF for the identified UE 103 to the MeNB 101.

At step 1101, the method 1100 configures the SeNB 102 to receive CQI reports and/or HARQ ACK/NAK for downlink data scheduled to the UE 103 from UEs served by the SCells of the SeNB 102. At step 1102, the method 1100 configures the SeNB 102 to detect the radio link problem on the serving frequency (second serving frequency) associated with the SCell of the SeNB. The SeNB 102 can identify the radio link problem as a downlink RLF based the parameters including but not limited to the CQI reports and/or the HARQ ACK/NAK indications sent to the SeNB 102 by the UE 103. At step 1103, the method 1100 configures the SeNB 102 to report the downlink RLF to the MeNB 101 through the non-ideal backhaul (X2 interface).

In an embodiment, the method 1100 configures the SeNB 102 to report the downlink RLF to the MeNB 101 through the ideal backhaul, if the ideal backhaul exists between the MeNB 101 and SeNB 102.

In an embodiment, the report includes parameters including but not limited to the cause value field indicating the downlink RLF and a reconfiguration message to re-establish one or more data radio bearer handled by the SeNB 102. Further, the method 1100 configures the MeNB 101 to send the RRC connection reconfiguration message on the first serving frequency served by the PCell 104 in downlink direction to the UE 103. In one example the RRC connection reconfiguration message indicates the UE 103 to perform replacement of the SCell with the suitable candidate SCell of the SeNB 102 or the suitable SCell of a suitable candidate SeNB in the wireless network 100. Further, the UE 103 is indicated to deactivate the second serving frequency associated with the SeNB 102 on which the RLF was detected and indicated to remove configuration associated with the SeNB 102. The recovery actions performed by the UE 103 to recover from the encountered RLF based on other possible reconfiguration parameters are already described in FIG. 4 and are not repeated for brevity.

The various actions, acts, blocks, steps, and the like in method 1100 may be performed in the order presented, in a different order or simultaneously. Further, in some embodiments, some actions, acts, blocks, steps, and the like may be omitted, added, modified, skipped, and the like without departing from the scope of the invention.

The embodiments disclosed herein can be implemented through at least one software program running on at least one hardware device and performing network management functions to control the elements. The elements shown in Figs. 1, 2a, 2b, 3a, 3b, 5, 6, 7 and 8 include blocks which can be at least one of a hardware device, or a combination of hardware device and software module.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the spirit and scope of the embodiments as described herein.

### [CLAUSES]

### [Clause 1]

A method for performing a Random Access procedure by a User Equipment (UE) in a wireless network, the method comprising:performing configuration with a Primary Cell (PCell) of a first evolved Node B (eNB) served on at least one first serving frequency and at least one Secondary Cell (SCell) of a first evolved Node B (eNB) served on at least one first serving frequency;transmitting a Random Access (RA) preamble on a Physical Random Access Channel (PRACH) to one of the at least one SCell;receiving a Random Access Response (RAR) message on a Physical Downlink Control Channel (PDCCH) from the one of the at least one SCell; andtransmitting uplink data to the one of the at least one SCell.

### [Clause 2]

The method of clause 1, wherein the performing configuration is performed when the UE receives a Radio Resource Control (RRC) connection reconfiguration message for addition of at least one SCell or replacement of at least one SCell with a Physical Uplink Control Channel (PUCCH) configuration.

### [Clause 3]

The method of clause 2, further comprising:decoding the RAR message using a Random Access Radio Network Temporary Identifier (RA-RNTI) associated with the PRACH;receiving an uplink grant, a random access preamble identifier, a Temporary C-RNTI and uplink timing advance information in response to the RA preamble; sending a request message containing a UE identity for contention resolution based on the uplink grant;receiving response in a contention resolution message using the Temporary C-RNTI and receiving back the UE identity; and sending a status of random access procedure to the first eNB.

### [Clause 4]

The method of clause 1, wherein the performing configuration is performed when the UE receives a Medium Access Control Element (MAC CE) for addition of at least one SCell or replacement of at least one SCell from the PCell.

### [Clause 5]

The method of clause 4, further comprising:receiving a Physical Uplink Control Channel (PUCCH) order including a random access preamble assignment from one of the first eNB and the second eNB;decoding the RAR message using a Random Access Radio Network Temporary Identifier (RA-RNTI) associated with the PRACH, the RAR message comprising an uplink grant and uplink timing advance information in response to the RA preamble; and sending a status of random access procedure to the first eNB.

### [Clause 6]

A User Equipment (UE) in a wireless network involving a first evolved Node B (eNB) connected to a second eNB, wherein the UE is carrier aggregated with at least one first serving frequency served by the first eNB and at least one second serving frequency served by the second eNB, wherein said UE comprises:an integrated circuit comprising at least one processor;at least one memory having a computer program code within the circuit;the computer program code configured to with the at least one processor cause the UE to:perform configuration with a Primary Cell (PCell) of a first evolved Node B (eNB) served on at least one first serving frequency and at least one Secondary Cell (SCell) of a first evolved Node B (eNB) served on at least one first serving frequency;transmit a Random Access (RA) preamble on a Physical Random Access Channel (PRACH) to one of the at least one SCell;receive a Random Access Response (RAR) message on a Physical Downlink Control Channel (PDCCH) from the one of the at least one SCell; and transmit uplink data to the one of the at least one SCell.

### [Clause 7]

The UE of clause 6, wherein the UE is configured to perform the configuration when the UE receives RRC connection a Radio Resource Control (RRC) connection reconfiguration message for addition of at least one SCell or replacement of at least one SCell with a Physical Uplink Control Channel (PUCCH) configuration.

### [Clause 8]

The UE of clause 7, wherein the UE is configured to:decode the RAR message using a Random Access Radio Network Temporary Identifier (RA-RNTI) associated with the PRACH;receive an uplink grant, a random access preamble identifier, a Temporary C-RNTI and uplink timing advance information in response to the RA preamble; send a request message containing a UE identity for contention resolution based on the uplink grant;receive response in a contention resolution message using the Temporary C-RNTI and receiving back the UE identity; and send a status of random access procedure to the first eNB.

### [Clause 9]

The UE of clause 6, wherein the UE is configured to perform the configuration when the UE receives a Medium Access Control Element (MAC CE) for addition of at least one SCell or replacement of at least one SCell from the PCell.

### [Clause 10]

The UE of clause 9, wherein the UE is configured to:receive a Physical Uplink Control Channel (PUCCH) order including a random access preamble assignment from one of the first eNB and the second eNB;decode the RAR message using a Random Access Radio Network Temporary Identifier (RA-RNTI) associated with the PRACH, the RAR message comprising an uplink grant and uplink timing advance information in response to the RA preamble; and send a status of random access procedure to the first eNB.

### [Clause 11]

A method for performing a Radio Link Failure procedure by a User Equipment (UE) in a wireless network, wherein the UE is carrier aggregated with at least one first serving frequency served by the first eNB and at least one second serving frequency served by the second eNB, the method comprising:detecting a radio link failure on the second serving frequency; transmitting information on the radio link failure to the first eNB; andreceiving a Radio Resource Control (RRC) connection reconfiguration message from the first eNB.

### [Clause 12]

The method of clause 11, wherein the radio link failure is one of a Random Access Channel (RACH) failure indicating that a random access preamble transmission counter exceeds a pre-defined threshold and a Radio Link Control (RLC) error indicating that maximum number of RLC retransmissions towards the second eNB exceeds a predefined threshold.

### [Clause 13]

The method of clause 11, further comprising:refraining from initiating a RRC connection re-establishment procedure towards the first eNB.

### [Clause 14]

The method of clause 12, wherein the information comprise a connection failure type indicating one of the RACH failure and the RLC error.

### [Clause 15]

The method of clause 11, the information is transmitted using a Medium Access Control (MAC) message or using a RRC message.

### [Clause 16]

The method of clause 14, the information further comprise a logical channel identity of uplink data radio bearer on which the RLC error is detected.

### [Clause 17]

A User Equipment (UE) in a wireless network involving a first evolved Node B (eNB) connected to a second eNB, wherein the UE is carrier aggregated with at least one first serving frequency served by the first eNB and at least one second serving frequency served by the second eNB, wherein said UE comprises:an integrated circuit comprising at least one processor;at least one memory having a computer program code within the circuit;the computer program code configured to with the at least one processor cause the UE to:detect a radio link failure on the second serving frequency; transmit information on the radio link failure to the first eNB; andreceive a Radio Resource Control (RRC) connection reconfiguration message from the first eNB.

### [Clause 18]

The UE of clause 17, wherein the radio link failure is one of a Random Access Channel (RACH) failure indicating that a random access preamble transmission counter exceeds a pre-defined threshold and a Radio Link Control (RLC) error indicating that maximum number of RLC retransmissions towards the second eNB exceeds a predefined threshold.

### [Clause 19]

The UE of clause 17, wherein the UE is further configured to refrain from initiating a RRC connection re-establishment procedure towards the first eNB.

### [Clause 20]

The UE of clause 18, wherein the information comprise a connection failure type indicating one of the RACH failure and the RLC error.

### [Clause 21]

The UE of clause 17, the information is transmitted using a Medium Access Control (MAC) message or using a RRC message.

### [Clause 22]

The UE of clause 20, the information further comprise a logical channel identity of uplink data radio bearer on which the RLC error is detected.

### [Clause 23]

A method for performing a Random Access procedure in wireless network, wherein the wireless network comprises a first evolved Node B (eNB) connected to plurality of second eNBs, wherein a User Equipment (UE) is carrier aggregated with at least one first serving frequency served by the first eNB and at least one second serving frequency served by a second eNB among the plurality of second eNBs, the method comprising:receiving a Random Access (RA) preamble on a Physical Random Access Channel (PRACH) from the UE at one of the at least one SCell;transmitting a Random Access Response (RAR) message on a Physical Downlink Control Channel (PDCCH) from the UE at the one of the at least one SCell; andreceiving uplink data from the UE at the one of the at least one SCell.

### [Clause 24]

The method of clause 23, further comprising:transmitting a Radio Resource Control (RRC) connection reconfiguration message for addition of at least one SCell or replacement of at least one SCell with a Physical Uplink Control Channel (PUCCH) configuration to the UE at by one of the at least one PCell.

### [Clause 25]

The method of clause 24, further comprising:transmitting an uplink grant, a random access preamble identifier, a Temporary C-RNTI and uplink timing advance information in response to the RA preamble to the UE at by the one of the at least one SCell; receiving a request message containing a UE identity for contention resolution based on the uplink grant from the UE at by the one of the at least one SCell;transmitting response in a contention resolution message using the Temporary C-RNTI and transmitting the UE identity to the UE at by the one of the at least one SCell; andreceiving a status of random access procedure from the UE at the one of the at least one PCell.

### [Clause 26]

The method of clause 23, further comprising:transmitting a Medium Access Control Element (MAC CE) for addition of at least one SCell or replacement of at least one SCell to the UE at one of the at least one PCell.

### [Clause 27]

The method of clause 26, further comprising:transmitting, by one of the first eNB and the second eNB, a Physical Uplink Control Channel (PUCCH) order including a random access preamble assignment to the UE; and receiving, by the first eNB, a status of random access procedure from the UE,wherein the RAR message comprises an uplink grant and uplink timing advance information in response to the RA preamble.

### [Clause 28]

A wireless network for performing a Random Access procedure, wherein the wireless network comprises a first evolved Node B (eNB) connected to plurality of second eNBs, wherein a User Equipment (UE) is carrier aggregated with at least one first serving frequency served by the first eNB and at least one second serving frequency served by a second eNB among the plurality of second eNBs, the wireless network is configured to:receive a Random Access (RA) preamble on a Physical Random Access Channel (PRACH) from the UE at one of the at least one SCell;transmit a Random Access Response (RAR) message on a Physical Downlink Control Channel (PDCCH) from the UE at the one of the at least one SCell; andreceive uplink data from the UE at the one of the at least one SCell.

### [Clause 29]

The wireless network of clause 28, wherein the wireless network is further configured to:transmit a Radio Resource Control (RRC) connection reconfiguration message for addition of at least one SCell or replacement of at least one SCell with a Physical Uplink Control Channel (PUCCH) configuration to the UE at one of the at least one PCell.

### [Clause 30]

The wireless network of clause 29, wherein the wireless network is further configured to:transmit an uplink grant, a random access preamble identifier, a Temporary C-RNTI and uplink timing advance information in response to the RA preamble to the UE at the one of the at least one SCell; receive a request message containing a UE identity for contention resolution based on the uplink grant from the UE at the one of the at least one SCell;transmit response in a contention resolution message using the Temporary C-RNTI and transmitting the UE identity to the UE at the one of the at least one SCell; andreceive a status of random access procedure from the UE at the one of the at least one PCell.

### [Clause 31]

The wireless network of clause 28, wherein the wireless network is further configured to:transmit a Medium Access Control Element (MAC CE) for addition of at least one SCell or replacement of at least one SCell to the UE at one of the at least one PCell.

### [Clause 32]

The wireless network of clause 31, wherein the wireless network is further configured to:transmit, by one of the first eNB and the second eNB a Physical Uplink Control Channel (PUCCH) order including a random access preamble assignment to the UE; and receive, by the first eNB, a status of random access procedure from the UE,wherein the RAR message comprises an uplink grant and uplink timing advance information in response to the RA preamble.

### [Clause 33]

A method for performing a Radio Link Failure procedure in a wireless network, wherein the wireless network comprises a first evolved Node B (eNB) connected to plurality of second eNBs, wherein a User Equipment (UE) is carrier aggregated with at least one first serving frequency served by the first eNB and at least one second serving frequency served by a second eNB among the plurality of second eNBs, the method comprising:receiving, by the first eNB, information on radio link failure from the UE detecting the radio link failure on the second serving frequency; and transmitting, by the first eNB, a Radio Resource Control (RRC) connection reconfiguration message to the UE.

### [Clause 34]

The method of clause 33, wherein the radio link failure is one of a Random Access Channel (RACH) failure indicating that a random access preamble transmission counter exceeds a pre-defined threshold and a Radio Link Control (RLC) error indicating that maximum number of RLC retransmissions towards the second eNB exceeds a predefined threshold.

### [Clause 35]

The method of clause 33, wherein the first eNB does not perform a RRC connection re-establishment procedure with the UE.

### [Clause 36]

The method of clause 34, wherein the information comprise a connection failure type indicating one of the RACH failure and the RLC error.

### [Clause 37]

The method of clause 33, the information is received using a Medium Access Control (MAC) message or using a RRC message.

### [Clause 38]

The method of clause 36, the information further comprise a logical channel identity of uplink data radio bearer on which the RLC error is detected.

### [Clause 39]

A wireless network for performing a Radio Link Failure procedure, wherein the wireless network comprises a first evolved Node B (eNB) connected to plurality of second eNBs, wherein a User Equipment (UE) is carrier aggregated with at least one first serving frequency served by the first eNB and at least one second serving frequency served by a second eNB among the plurality of second eNBs, the wireless network is configured to:receive, by the first eNB, information on radio link failure from the UE detecting the radio link failure on the second serving frequency; and transmit, by the first eNB, a Radio Resource Control (RRC) connection reconfiguration message to the UE.

### [Clause 40]

The wireless network of clause 39, wherein the radio link failure is one of a Random Access Channel (RACH) failure indicating that a random access preamble transmission counter exceeds a pre-defined threshold and a Radio Link Control (RLC) error indicating that maximum number of RLC retransmissions towards the second eNB exceeds a predefined threshold.

### [Clause 41]

The wireless network of clause 39, wherein the first eNB does not perform a RRC connection re-establishment procedure with the UE.

### [Clause 42]

The wireless network of clause 40, wherein the information comprise a connection failure type indicating one of the RACH failure and the RLC error.

### [Clause 43]

The wireless network of clause 39, the information is received using a Medium Access Control (MAC) message or using a RRC message.

### [Clause 44]

The wireless network of clause 42, the information further comprise a logical channel identity of uplink data radio bearer on which the RLC error is detected.

## Claims

1. A method for performing a Random Access procedure by a User Equipment (UE) in a wireless network, the method comprising:
performing a random access (RA) procedure on a Primary Cell (PCell) of a first base station (BS);
receiving, from the first BS, a Radio Resource Control (RRC) connection reconfiguration message for addition or modification of a second BS;
transmitting, to the first BS, a response message corresponding to the RRC connection reconfiguration message;
performing the RA procedure on a Secondary Cell (SCell) of the second BS; and
transmitting uplink data to the SCell,
wherein performing the RA procedure on the SCell comprises:
transmitting, to the second BS, a RA preamble on a Physical Random Access Channel PRACH;
receiving, from the second BS, a random access response RAR message; and
setting a first cell radio network temporary identifier C-RNTI to a value of a temporary C-RNTI included the RAR message,
wherein the first C-RNTI and a second C-RNTI allocated by the first BS are independently allocated to the UE.

2. The method of claim 1, further comprising;
transmitting, to the second base station, a message based on an uplink grant included the RAR message;
receiving, from the second BS, a contention resolution message using the temporary C-RNTI.

3. The method of claim 1, wherein the RAR message further includes timing advance information.

4. The method of claim 1, further comprising:
monitoring a common search space of a physical downlink control channel (PDCCH) for reception of the RAR message.

5. The method of claim 1, wherein the RA procedure on the SCell is initiated by the UE.

6. A User Equipment (UE) for performing a Random Access procedure in a wireless network, the UE comprising:
at least one processor configured to:
perform a random access (RA) procedure on a Primary Cell (PCell) of a first base station (BS);
receive, from the first BS, a Radio Resource Control (RRC) connection reconfiguration message for addition or modification of a second BS;
transmit, to the first BS, a response message corresponding to the RRC connection reconfiguration message;
perform the RA procedure on a Secondary Cell (SCell) of the second BS; and
transmit uplink data to the SCell,
wherein the at least one processor is further configured to:
transmit, to the second BS, a RA preamble on a Physical Random Access Channel (PRACH);
receive, from the second BS, a random access response (RAR) message; and
set a first cell radio network temporary identifier (C-RNTI) to a value of a temporary C-RNTI included the RAR message,
wherein the first C-RNTI and a second C-RNTI allocated by the first BS are independently allocated to the UE.

7. The UE of claim 6, wherein the at least one processor is further configured to:
transmit, to the second base station, a message based on an uplink grant included the RAR message;
receive, from the second BS, a contention resolution message using the temporary C-RNTI.

8. The UE of claim 6, wherein the RAR message further includes timing advance information.

9. The UE of claim 6, wherein the at least one processor is further configured to:
monitor a common search space of a physical downlink control channel (PDCCH) for reception of the RAR message.

10. The UE of claim 6, wherein the RA procedure on the SCell is initiated by the UE.

11. A method for performing a Random Access procedure by a second base station (BS) in a wireless network, wherein a User Equipment (UE) is connected to a first BS and the second BS, the method comprising:
performing a random access (RA) procedure on a Secondary Cell (SCell) of the second BS; and
receiving, from the UE, uplink data,
wherein performing the RA procedure on the SCell comprises:
receiving, from the UE, a RA preamble on a Physical Random Access Channel (PRACH); and
transmitting, to the UE, a random access response (RAR) message, the RAR message including a temporary cell radio network temporary identifier (C-RNTI),
wherein a value of temporary C-RNTI is used to set up first C-RNTI for the second BS, and
wherein the first C-RNTI and a second C-RNTI allocated by the first BS are independently allocated to the UE,
wherein the UE performs a random access RA procedure on a Primary Cell PCell of a first base station BS, receives, from the first BS, a Radio Resource Control RRC connection reconfiguration message for addition or modification of a second BS, and transmits, to the first BS, a response message corresponding to the RRC connection reconfiguration message.

12. The method of claim 11, further comprising;
receiving, from the UE, a message based on an uplink grant included the RAR message;
transmitting, to the UE, a contention resolution message using the temporary C-RNTI.

13. The method of claim 11, wherein the RAR message further includes timing advance information.

14. The method of claim 11, further comprising:
transmitting, to the UE, a Physical Downlink Control Channel (PDCCH) order including the random access preamble.

15. The method of claim 11, wherein the RA procedure on the SCell is initiated by the UE.

16. A second base station (BS) for performing a Random Access procedure in a wireless network, wherein a User Equipment (UE) is connected to a first BS and the second BS, the second BS comprising:
at least one processor configured to:
perform a random access (RA) procedure on a Secondary Cell (SCell) of the second BS; and
receive, from the UE, uplink data,
wherein the at least one processor is further configured to:
receive, from the UE, a RA preamble on a Physical Random Access Channel (PRACH); and
transmit, to the UE, a random access response (RAR) message, the RAR message including a temporary cell radio network temporary identifier (C-RNTI),
wherein a value of temporary C-RNTI is used to set up first C-RNTI for the second BS, and
wherein the first C-RNTI and a second C-RNTI allocated by the first BS are independently allocated to the UE,
wherein the UE performs a random access RA procedure on a Primary Cell PCell of a first base station BS, receives, from the first BS, a Radio Resource Control RRC connection reconfiguration message for addition or modification of a second BS, and transmits, to the first BS, a response message corresponding to the RRC connection reconfiguration message.

17. The second BS of claim 16, wherein the at least one processor is further configured to:
receive, from the UE, a message based on an uplink grant included the RAR message;
transmit, to the UE, a contention resolution message using the temporary C-RNTI.

18. The second BS of claim 16, wherein the RAR message further includes timing advance information.

19. The second BS of claim 16, wherein the at least one processor is further configured to:
transmit, to the UE, a Physical Downlink Control Channel (PDCCH) order including the random access preamble.

20. The second BS of claim 16, wherein the RA procedure on the SCell is initiated by the UE.
